# EUROPEAN PATENT APPLICATION

(11) **EP 4 443 994 A1**
(43) Date of publication of application: **09.10.2024**
(21) Application number: 22914305.2
(22) Date of filing: 15.12.2022
(51) Int. Cl.: H04W 64/00, H04W 4/80

(54) **MEASUREMENT ESTABLISHMENT IDENTIFIER DETERMINATION METHOD AND RELATED DEVICE**

(30) Priority: 31.12.2021 CN 202111679651
(71) Applicant: Huawei Technologies Co., Ltd., Shenzhen, Guangdong 518129 (CN)
(72) Inventor: HU, Mengshi, Shenzhen, Guangdong 518129 (CN); HAN, Xiao, Shenzhen, Guangdong 518129 (CN); DU, Rui, Shenzhen, Guangdong 518129 (CN); NAREN, Gerile, Shenzhen, Guangdong 518129 (CN); YANG, Xun, Shenzhen, Guangdong 518129 (CN)
(74) Representative: Körber, Martin Hans
(86) International application number: PCT/CN2022/139354
(87) International publication number: WO 2023/125051

(57) **Abstract**

This application relates to the field of wireless communication, and is applied to a wireless local area network that supports the 802.11 series standards such as the 802.11bf standard, and in particular, to a measurement setup identifier determining method and a related apparatus. The method includes: A requesting STA requests an AP as a proxy of the requesting STA to perform sensing measurement. The AP obtains parameters used by the AP and a sensing responder (STA 3) in a proxy sensing procedure, and identifies the parameters. The AP uses an identifier different from an existing identifier at the AP when identifying the parameters. The AP then sends the parameters and the identifier to the sensing responder (STA 3). According to embodiments of this application, a problem of setting a measurement setup identifier in a proxy sensing scenario can be resolved, so that the measurement setup identifier set in the proxy sensing scenario can be distinguished from a measurement setup identifier set in a non-proxy sensing scenario.

## Description

This application claims priority to Chinese Patent Application No. 202111679651.4, filed with the China National Intellectual Property Administration on December 31, 2021 and entitled "MEASUREMENT SETUP IDENTIFIER DETERMINING METHOD AND RELATED APPARATUS", which is incorporated herein by reference in its entirety.

### TECHNICAL FIELD

This application relates to the field of wireless communication technologies, and in particular, to a measurement setup identifier determining method and a related apparatus.

### BACKGROUND

Due to wide deployment of wireless fidelity (wireless fidelity, Wi-Fi) devices and an increase in sensing (Sensing) requirements, sensing performed by widely available Wi-Fi devices is a hot topic of current research. In daily life, a signal sent by a Wi-Fi device is usually received only after being reflected, diffracted, and scattered by various obstacles. As a result, an actually received signal is usually a superposition of a plurality of signals. Therefore, a wireless signal may sense a physical environment that the wireless signal passes through, and a surrounding environment may be inferred by analyzing the wireless signal "modulated" by various obstacles, thereby deriving a wireless local area network (wireless local area network, WLAN) sensing (sensing) technology. WLAN sensing is a technology with a broad application prospect. In the WLAN sensing technology, widely deployed Wi-Fi devices may be used to send specific data or communication channel probe frames to sense a surrounding environment, receive reflected signals or feedback information generated by peer devices in a wireless network, and then extract corresponding parameters in the received signals by using specific algorithms for analysis. In this way, surrounding environment information can be obtained.

A sensing procedure (sensing procedure) defined in the 802.11bf standard mainly includes five phases: sensing session setup (sensing session setup), measurement setup (measurement setup), measurement instance (measurement instance), measurement setup termination (measurement setup termination), and sensing session termination (sensing session termination). The measurement setup is mainly used by a sensing initiator (sensing initiator) and a sensing responder (sensing responder) to exchange and unify parameters/features to be used in the sensing procedure. In the sensing procedure, a sensing initiator and a sensing responder may exchange and unify a plurality of groups of parameters/features used in the sensing procedure. Therefore, for clear identification, a manner of labeling a measurement setup is proposed to distinguish different groups of parameters/features used in the sensing procedure.

Because the 802.11bf protocol currently does not support sensing between two non-access point stations (non-access point stations, non-AP STAs), there is a special scenario in the sensing procedure, to be specific, a station (station, STA) wants an access point (access point, AP) to help complete measurement with another sensing responder. For ease of description, this special scenario is referred to as a proxy sensing scenario in this specification. Therefore, how to identify a measurement setup in the proxy sensing scenario is a problem worth considering.

### SUMMARY

Embodiments of this application provide a measurement setup identifier determining method and a related apparatus, to resolve a problem of setting a measurement setup identifier (measurement setup ID) in a proxy sensing scenario, so that the measurement setup identifier set in the proxy sensing scenario can be distinguished from a measurement setup identifier set in a common sensing scenario (or a non-proxy sensing scenario).

The following describes this application from different aspects. It should be understood that, for the following implementations and advantageous effects of the different aspects, refer to each other.

According to a first aspect, this application provides a measurement setup identifier determining method. The method further includes: A proxy sensing initiator (AP) obtains first measurement setup parameters, and sends first information to a sensing responder (STA 3), where the first information includes the first measurement setup parameters and a first measurement setup identifier. The first measurement setup parameters include parameters used by the proxy sensing initiator (AP) and the sensing responder (STA 3) in a proxy sensing procedure. The first measurement setup identifier identifies the first measurement setup parameters. The first measurement setup identifier is different from measurement setup identifiers used by the proxy sensing initiator (AP).

Optionally, before the proxy sensing initiator (AP) obtains the first measurement setup parameters, a requesting STA (STA 1) requests the AP as a proxy (proxy) of the requesting STA to perform sensing measurement.

Optionally, after receiving the first information, the sensing responder (STA 3) establishes an association relationship between the first measurement setup parameters and the first measurement setup identifier, so that the first measurement setup parameters can be uniquely indexed by using the first measurement setup identifier in a subsequent sensing measurement procedure.

In this application, the measurement setup identifiers used by the proxy sensing initiator (AP) include a measurement setup identifier used by the proxy sensing initiator (AP) in a sensing procedure (herein, which is a non-proxy sensing procedure), and a measurement setup identifier used by the proxy sensing initiator (AP) in the proxy sensing procedure.

Measurement setup parameters in this application may include parameters such as a role of the proxy sensing initiator, a role of the sensing responder, a bandwidth, and a measurement feedback type.

In this solution, it is restricted that a measurement setup ID set in the proxy sensing procedure does not belong to an existing measurement setup ID set at the AP, so that a problem of setting a measurement setup identifier in a proxy sensing scenario can be resolved. In addition, the measurement setup identifier set in the proxy sensing scenario is distinguished from a measurement setup identifier set in a common sensing scenario (or a non-proxy sensing scenario), thereby avoiding confusion and avoiding affecting a subsequent sensing measurement procedure.

With reference to the first aspect, in a possible implementation, that a proxy sensing initiator (AP) obtains first measurement setup parameters includes: The proxy sensing initiator (AP) receives second information sent by the requesting STA, where the second information includes second measurement setup parameters, and the second measurement setup parameters include all or a part of the parameters used by the proxy sensing initiator (AP) and the sensing responder (STA 3) in the proxy sensing procedure. The proxy sensing initiator (AP) determines the first measurement setup parameters based on the second measurement setup parameters. In other words, the proxy sensing initiator (AP) and the requesting STA may determine the first measurement setup parameters through negotiation.

With reference to the first aspect, in a possible implementation, that a proxy sensing initiator (AP) obtains first measurement setup parameters includes: The proxy sensing initiator (AP) receives second information sent by the requesting STA, where the second information includes the first measurement setup parameters. In other words, the requesting STA directly notifies the proxy sensing initiator (AP) of related parameters (namely, the first measurement setup parameters) of the measurement setup that the requesting STA wants to establish, and the proxy sensing initiator (AP) does not need to negotiate with the requesting STA about the related parameters because the proxy sensing initiator (AP) cannot modify the related parameters.

Optionally, the second information further includes a second measurement setup identifier. The second measurement setup identifier may identify the first measurement setup parameters. When the second information further includes the second measurement setup identifier, a mapping relationship may exist in the proxy sensing initiator (AP), for example, the second measurement setup identifier corresponds to the first measurement setup identifier. In this way, when the requesting STA exchanges content related to the first measurement setup identifier with the proxy sensing initiator (AP), the proxy sensing initiator (AP) and the sensing responder (STA 3) use the second measurement setup identifier to indicate the related content.

Optionally, when the second measurement setup identifier is not the measurement setup identifier used by the proxy sensing initiator (AP), the proxy sensing initiator (AP) uses the second measurement setup identifier as the first measurement setup identifier. In other words, when the second measurement setup identifier is not the measurement setup identifier used by the proxy sensing initiator (AP), the first measurement setup identifier is the same as the second measurement setup identifier.

With reference to the first aspect, in a possible implementation, after the proxy sensing initiator (AP) sends the first information to the sensing responder (STA 3), the method further includes: The proxy sensing initiator (AP) sends third information to the sensing responder (STA 3), where the third information includes the first measurement setup identifier.

Optionally, in addition to carrying the first measurement setup identifier, the third information further carries a part of parameters in the first measurement setup parameters, for example, the bandwidth.

According to a second aspect, this application provides a communication apparatus. The communication apparatus may be a proxy sensing initiator (AP) or a chip in the proxy sensing initiator (AP), for example, a Wi-Fi chip. The communication apparatus includes: an obtaining module, configured to obtain first measurement setup parameters, where the first measurement setup parameters include parameters used by the proxy sensing initiator (AP) and a sensing responder (STA 3) in a proxy sensing procedure; and a transceiver module, configured to send first information to the sensing responder, where the first information includes the first measurement setup parameters and a first measurement setup identifier, the first measurement setup identifier identifies the first measurement setup parameters, and the first measurement setup identifier is different from measurement setup identifiers used by the proxy sensing initiator (AP).

With reference to the second aspect, in a possible implementation, the obtaining module includes a receiving unit and a determining unit. The receiving unit is configured to receive second information sent by a requesting station STA, where the second information includes second measurement setup parameters, and the second measurement setup parameters include all or a part of the parameters used by the proxy sensing initiator (AP) and the sensing responder (STA 3) in the proxy sensing procedure. The determining unit is configured to determine the first measurement setup parameters based on the second measurement setup parameters.

With reference to the second aspect, in a possible implementation, the receiving unit in the obtaining module is configured to receive second information sent by a requesting STA, where the second information includes the first measurement setup parameters.

Optionally, the second information further includes a second measurement setup identifier. The second measurement setup identifier corresponds to the first measurement setup identifier.

Optionally, when the second measurement setup identifier is not the measurement setup identifier used by the proxy sensing initiator (AP), the first measurement setup identifier is the same as the second measurement setup identifier.

With reference to the second aspect, in a possible implementation, the measurement setup identifiers used by the proxy sensing initiator (AP) include a measurement setup identifier used by the proxy sensing initiator (AP) in a sensing procedure (herein, which is a non-proxy sensing procedure), and a measurement setup identifier used by the proxy sensing initiator (AP) in the proxy sensing procedure.

With reference to the second aspect, in a possible implementation, the transceiver module is further configured to send third information to the sensing responder (STA 3), where the third information includes the first measurement setup identifier.

According to a third aspect, this application provides a measurement setup identifier determining method. The method further includes: A proxy sensing initiator (AP) obtains first measurement setup parameters, and sends first information to a sensing responder (STA 3), where the first information includes the first measurement setup parameters and a first measurement setup identifier. The first measurement setup parameters include parameters used by the proxy sensing initiator (AP) and the sensing responder (STA 3) in a proxy sensing procedure. The first measurement setup identifier identifies the first measurement setup parameters. If a third measurement setup identifier that identifies measurement setup parameters same as the first measurement setup parameters exists in a first identifier set, the first measurement setup identifier is the third measurement setup identifier, or the first measurement setup identifier does not belong to the first identifier set; or if any measurement setup identifier that identifies measurement setup parameters same as the first measurement setup parameters does not exist in a first identifier set, the first measurement setup identifier does not belong to the first identifier set. The first identifier set includes measurement setup identifiers used by the proxy sensing initiator (AP).

Optionally, before the proxy sensing initiator (AP) obtains the first measurement setup parameters, a requesting STA (STA 1) requests the AP as a proxy (proxy) of the requesting STA to perform sensing measurement.

Optionally, after receiving the first information, the sensing responder (STA 3) establishes an association relationship between the first measurement setup parameters and the first measurement setup identifier, so that the first measurement setup parameters can be uniquely indexed by using the first measurement setup identifier in a subsequent sensing measurement procedure.

In this application, the measurement setup identifiers used by the proxy sensing initiator (AP) include a measurement setup identifier used by the proxy sensing initiator (AP) in a sensing procedure (herein, which is a non-proxy sensing procedure), and a measurement setup identifier used by the proxy sensing initiator (AP) in the proxy sensing procedure.

Measurement setup parameters in this application may include parameters such as a role of the proxy sensing initiator, a role of the sensing responder, a bandwidth, and a measurement feedback type.

In this solution, when the AP (proxy sensing initiator) serving as a proxy identifies a measurement setup in the proxy sensing procedure, whether to use an ID in an existing measurement setup ID set at the AP is determined by determining whether the first measurement setup parameters are the same as parameters corresponding to the measurement setup ID in the existing measurement setup ID set (that is, the first identifier set) at the proxy AP (proxy sensing initiator). In this way, a problem of setting a measurement setup identifier in a proxy sensing scenario can be resolved; and measurement setup identifiers in different scenarios can be distinguished, thereby avoiding confusion; and ID resources can be saved.

With reference to the third aspect, in a possible implementation, that a proxy sensing initiator (AP) obtains first measurement setup parameters includes: The proxy sensing initiator (AP) receives second information sent by the requesting STA, where the second information includes second measurement setup parameters, and the second measurement setup parameters include all or a part of the parameters used by the proxy sensing initiator (AP) and the sensing responder (STA 3) in the proxy sensing procedure. The proxy sensing initiator (AP) determines the first measurement setup parameters based on the second measurement setup parameters. In other words, the proxy sensing initiator (AP) and the requesting STA may determine the first measurement setup parameters through negotiation.

With reference to the third aspect, in a possible implementation, that a proxy sensing initiator (AP) obtains first measurement setup parameters includes: The proxy sensing initiator (AP) receives second information sent by the requesting STA, where the second information includes the first measurement setup parameters. In other words, the requesting STA directly notifies the proxy sensing initiator (AP) of related parameters (namely, the first measurement setup parameters) of the measurement setup that the requesting STA wants to establish, and the proxy sensing initiator (AP) does not need to negotiate with the requesting STA about the related parameters because the proxy sensing initiator (AP) cannot modify the related parameters.

Optionally, the second information further includes a second measurement setup identifier. The second measurement setup identifier may identify the first measurement setup parameters. When the second information further includes the second measurement setup identifier, a mapping relationship may exist in the proxy sensing initiator (AP), for example, the second measurement setup identifier corresponds to the first measurement setup identifier. In this way, when the requesting STA exchanges content related to the first measurement setup identifier with the proxy sensing initiator (AP), the proxy sensing initiator (AP) and the sensing responder (STA 3) use the second measurement setup identifier to indicate the related content.

With reference to the third aspect, in a possible implementation, after the proxy sensing initiator (AP) sends the first information to the sensing responder (STA 3), the method further includes: The proxy sensing initiator (AP) sends third information to the sensing responder (STA 3), where the third information includes the first measurement setup identifier.

Optionally, in addition to carrying the first measurement setup identifier, the third information further carries a part of parameters in the first measurement setup parameters, for example, the bandwidth.

According to a fourth aspect, this application provides a communication apparatus. The communication apparatus may be a proxy sensing initiator (AP) or a chip in the proxy sensing initiator (AP), for example, a Wi-Fi chip. The communication apparatus includes: an obtaining module, configured to obtain first measurement setup parameters, where the first measurement setup parameters include parameters used by the proxy sensing initiator and a sensing responder in a proxy sensing procedure; and a transceiver module, configured to send first information to the sensing responder, where the first information includes the first measurement setup parameters and a first measurement setup identifier, and the first measurement setup identifier identifies the first measurement setup parameters. If a third measurement setup identifier that identifies measurement setup parameters same as the first measurement setup parameters exists in a first identifier set, the first measurement setup identifier is the third measurement setup identifier, or the first measurement setup identifier does not belong to the first identifier set; or if any measurement setup identifier that identifies measurement setup parameters same as the first measurement setup parameters does not exist in a first identifier set, the first measurement setup identifier does not belong to the first identifier set. The first identifier set includes measurement setup identifiers used by the proxy sensing initiator.

With reference to the fourth aspect, in a possible implementation, the obtaining module includes a receiving unit and a determining unit. The receiving unit is configured to receive second information sent by a requesting station STA, where the second information includes second measurement setup parameters, and the second measurement setup parameters include all or a part of the parameters used by the proxy sensing initiator and the sensing responder in the proxy sensing procedure. The determining unit is configured to determine the first measurement setup parameters based on the second measurement setup parameters.

With reference to the fourth aspect, in a possible implementation, the receiving unit in the obtaining module is configured to receive second information sent by a requesting STA, where the second information includes the first measurement setup parameters.

Optionally, the second information further includes a second measurement setup identifier. The second measurement setup identifier corresponds to the first measurement setup identifier.

With reference to the fourth aspect, in a possible implementation, the measurement setup identifiers used by the proxy sensing initiator (AP) include a measurement setup identifier used by the proxy sensing initiator (AP) in a sensing procedure (herein, which is a non-proxy sensing procedure), and a measurement setup identifier used by the proxy sensing initiator (AP) in the proxy sensing procedure.

With reference to the fourth aspect, in a possible implementation, the transceiver module is further configured to send third information to the sensing responder (STA 3), where the third information includes the first measurement setup identifier.

According to a fifth aspect, this application provides a measurement setup method in a proxy sensing procedure. The method includes: A proxy sensing initiator (AP) obtains first measurement setup parameters, and sends first information to a sensing responder (STA 3), where the first information includes the first measurement setup parameters, a first measurement setup identifier, and fourth information. The first measurement setup parameters include parameters used by the proxy sensing initiator (AP) and the sensing responder (STA 3) in the proxy sensing procedure. The first measurement setup identifier identifies the first measurement setup parameters. The fourth information includes information for identifying a requesting STA, and/or information indicating that a measurement setup requested to establish by using the first information belongs to the proxy sensing procedure.

Optionally, before the proxy sensing initiator (AP) obtains the first measurement setup parameters, the requesting STA (STA 1) requests the AP as a proxy (proxy) of the requesting STA to perform sensing measurement.

Measurement setup parameters in this application may include parameters such as a role of the proxy sensing initiator, a role of the sensing responder, a bandwidth, and a measurement feedback type.

In this solution, when sending the measurement setup ID in the proxy sensing procedure, the proxy sensing initiator (AP) carries the information for identifying the requesting STA and/or the information indicating that the to-be-established measurement setup belongs to the proxy sensing procedure, to assist the sensing responder (STA 3) to distinguish different measurement setups. A problem of setting a measurement setup identifier in a proxy sensing scenario is resolved from another perspective, thereby avoiding confusion.

With reference to the fifth aspect, in a possible implementation, the information for identifying the requesting STA includes one or more of the following: identifiers of the requesting STA, a part or all of medium access control (medium access control, MAC) addresses of the requesting STA, and a virtual number of the requesting STA. The identifiers of the requesting STA are a part or all of association identifiers of the requesting STA, or a part or all of unassociated station identifiers of the requesting STA. The virtual number of the requesting STA may be set by the AP (proxy sensing initiator). The information indicating that the measurement setup requested to establish by using the first information belongs to the proxy sensing procedure may be 1 bit. When the bit is set to 1, it indicates that the measurement setup requested to establish by using the first information belongs to the proxy sensing procedure. When the bit is set to 0, it indicates that the measurement setup requested to establish by using the first information does not belong to the proxy sensing procedure or indicates reserved (reserved).

With reference to the fifth aspect, in a possible implementation, that a proxy sensing initiator (AP) obtains first measurement setup parameters includes: The proxy sensing initiator (AP) receives second information sent by the requesting STA, where the second information includes second measurement setup parameters, and the second measurement setup parameters include all or a part of the parameters used by the proxy sensing initiator (AP) and the sensing responder (STA 3) in the proxy sensing procedure. The proxy sensing initiator (AP) determines the first measurement setup parameters based on the second measurement setup parameters. In other words, the proxy sensing initiator (AP) and the requesting STA may determine the first measurement setup parameters through negotiation.

With reference to the fifth aspect, in a possible implementation, that a proxy sensing initiator (AP) obtains first measurement setup parameters includes: The proxy sensing initiator (AP) receives second information sent by the requesting STA, where the second information includes the first measurement setup parameters. In other words, the requesting STA directly notifies the proxy sensing initiator (AP) of related parameters (namely, the first measurement setup parameters) of the measurement setup that the requesting STA wants to establish, and the proxy sensing initiator (AP) does not need to negotiate with the requesting STA about the related parameters because the proxy sensing initiator (AP) cannot modify the related parameters.

Optionally, the second information further includes a second measurement setup identifier. The second measurement setup identifier may identify the first measurement setup parameters.

With reference to the fifth aspect, in a possible implementation, after the proxy sensing initiator (AP) sends the first information to the sensing responder (STA 3), the method further includes: The proxy sensing initiator (AP) sends third information to the sensing responder (STA 3), where the third information includes the first measurement setup identifier and the fourth information.

Optionally, in addition to carrying the first measurement setup identifier and the fourth information, the third information may further carry a part of parameters in the first measurement setup parameters, for example, the bandwidth.

According to a sixth aspect, this application provides a measurement setup method in a proxy sensing procedure. The method includes: A sensing responder (STA 3) receives first information from a proxy sensing initiator (AP), and obtains, from the first information, first measurement setup parameters, a first measurement setup identifier, and fourth information that are included in the first information. The first measurement setup parameters include parameters used by the proxy sensing initiator (AP) and the sensing responder (STA 3) in the proxy sensing procedure. The first measurement setup identifier identifies the first measurement setup parameters. The fourth information includes information for identifying a requesting STA, and/or information indicating that a measurement setup requested to establish by using the first information belongs to the proxy sensing procedure.

Optionally, after obtaining the first measurement setup parameters, the first measurement setup identifier, and the fourth information, the sensing responder (STA 3) establishes an association relationship between the first measurement setup parameters, the first measurement setup identifier, and the fourth information, so that the first measurement setup parameters can be uniquely indexed by using the first measurement setup identifier and the fourth information in a subsequent sensing measurement procedure.

With reference to the sixth aspect, in a possible implementation, the information for identifying the requesting STA includes one or more of the following: identifiers of the requesting STA, a part or all of MAC addresses of the requesting STA, and a virtual number of the requesting STA. The identifiers of the requesting STA are a part or all of association identifiers of the requesting STA, or a part or all of unassociated station identifiers of the requesting STA. The virtual number of the requesting STA may be set by the AP (proxy sensing initiator). The information indicating that the measurement setup requested to establish by using the first information belongs to the proxy sensing procedure may be 1 bit. When the bit is set to 1, it indicates that the measurement setup requested to establish by using the first information belongs to the proxy sensing procedure. When the bit is set to 0, it indicates that the measurement setup requested to establish by using the first information does not belong to the proxy sensing procedure or indicates reserved (reserved).

With reference to the sixth aspect, in a possible implementation, after the sensing responder (STA3) receives the first information from the proxy sensing initiator (AP), the method further includes: The sensing responder (STA 3) receives third information from the proxy sensing initiator (AP), where the third information includes the first measurement setup identifier and the fourth information.

Optionally, in addition to carrying the first measurement setup identifier and the fourth information, the third information may further carry a part of parameters in the first measurement setup parameters, for example, the bandwidth.

According to a seventh aspect, this application provides a communication apparatus. The communication apparatus may be a proxy sensing initiator (AP) or a chip in the proxy sensing initiator (AP), for example, a Wi-Fi chip. The communication apparatus includes: an obtaining module, configured to obtain first measurement setup parameters, where the first measurement setup parameters include parameters used by the proxy sensing initiator and a sensing responder in a proxy sensing procedure; and a transceiver module, configured to send first information to the sensing responder, where the first information includes the first measurement setup parameters, a first measurement setup identifier, and fourth information; the first measurement setup identifier identifies the first measurement setup parameters; and the fourth information includes information for identifying a requesting STA, and/or information indicating that a measurement setup requested to establish by using the first information belongs to the proxy sensing procedure.

With reference to the seventh aspect, in a possible implementation, the information for identifying the requesting STA includes one or more of the following: identifiers of the requesting STA, a part or all of medium access control MAC addresses of the requesting STA, and a virtual number of the requesting STA. The identifiers of the requesting STA are a part or all of association identifiers of the requesting STA, or a part or all of unassociated station identifiers of the requesting STA.

With reference to the seventh aspect, in a possible implementation, the obtaining module includes a receiving unit and a determining unit. The receiving unit is configured to receive second information sent by the requesting station STA, where the second information includes second measurement setup parameters, and the second measurement setup parameters include all or a part of the parameters used by the proxy sensing initiator and the sensing responder in the proxy sensing procedure. The determining unit is configured to determine the first measurement setup parameters based on the second measurement setup parameters.

With reference to the seventh aspect, in a possible implementation, the receiving unit in the obtaining module is configured to receive second information sent by the requesting STA, where the second information includes the first measurement setup parameters.

Optionally, the second information further includes a second measurement setup identifier.

With reference to the seventh aspect, in a possible implementation, the transceiver module is further configured to send third information to the sensing responder, where the third information includes the first measurement setup identifier and the fourth information.

According to an eighth aspect, this application provides a communication apparatus. The communication apparatus may be a sensing responder (STA 3) or a chip in the sensing responder (STA 3), for example, a Wi-Fi chip. The communication apparatus includes: a transceiver module, configured to receive first information from a proxy sensing initiator (AP); and an obtaining module, configured to obtain, from the first information, first measurement setup parameters, a first measurement setup identifier, and fourth information that are included in the first information. The first measurement setup parameters include parameters used by the proxy sensing initiator (AP) and the sensing responder (STA 3) in a proxy sensing procedure. The first measurement setup identifier identifies the first measurement setup parameters. The fourth information includes information for identifying a requesting STA, and/or information indicating that a measurement setup requested to establish by using the first information belongs to the proxy sensing procedure.

With reference to the eighth aspect, in a possible implementation, the information for identifying the requesting STA includes one or more of the following: identifiers of the requesting STA, a part or all of medium access control MAC addresses of the requesting STA, and a virtual number of the requesting STA. The identifiers of the requesting STA are a part or all of association identifiers of the requesting STA, or a part or all of unassociated station identifiers of the requesting STA.

With reference to the eighth aspect, in a possible implementation, the transceiver module is further configured to receive third information from the proxy sensing initiator (AP), where the third information includes the first measurement setup identifier and the fourth information.

According to a ninth aspect, this application provides a communication apparatus that is specifically a proxy sensing initiator (AP) and includes a processor and a transceiver.

In a design, the processor is configured to obtain first measurement setup parameters, where the first measurement setup parameters include parameters used by the proxy sensing initiator (AP) and a sensing responder (STA 3) in a proxy sensing procedure. The transceiver is configured to send first information to the sensing responder, where the first information includes the first measurement setup parameters and a first measurement setup identifier, the first measurement setup identifier identifies the first measurement setup parameters, and the first measurement setup identifier is different from measurement setup identifiers used by the proxy sensing initiator (AP).

In a design, the processor is configured to obtain first measurement setup parameters, where the first measurement setup parameters include parameters used by the proxy sensing initiator and a sensing responder in a proxy sensing procedure. The transceiver is configured to send first information to the sensing responder, where the first information includes the first measurement setup parameters and a first measurement setup identifier, and the first measurement setup identifier identifies the first measurement setup parameters. If a third measurement setup identifier that identifies measurement setup parameters same as the first measurement setup parameters exists in a first identifier set, the first measurement setup identifier is the third measurement setup identifier, or the first measurement setup identifier does not belong to the first identifier set; or if any measurement setup identifier that identifies measurement setup parameters same as the first measurement setup parameters does not exist in a first identifier set, the first measurement setup identifier does not belong to the first identifier set. The first identifier set includes measurement setup identifiers used by the proxy sensing initiator.

In a design, the processor is configured to obtain first measurement setup parameters, where the first measurement setup parameters include parameters used by the proxy sensing initiator and a sensing responder in a proxy sensing procedure. The transceiver is configured to send first information to the sensing responder, where the first information includes the first measurement setup parameters, a first measurement setup identifier, and fourth information; the first measurement setup identifier identifies the first measurement setup parameters; and the fourth information includes information for identifying a requesting STA, and/or information indicating that a measurement setup requested to establish by using the first information belongs to the proxy sensing procedure.

According to a tenth aspect, this application provides a communication apparatus that is specifically a sensing responder (STA 3) and includes a processor and a transceiver. The transceiver is configured to receive first information from a proxy sensing initiator (AP). The processor is configured to obtain, from the first information, first measurement setup parameters, a first measurement setup identifier, and fourth information that are included in the first information. The first measurement setup parameters include parameters used by the proxy sensing initiator (AP) and the sensing responder (STA 3) in a proxy sensing procedure. The first measurement setup identifier identifies the first measurement setup parameters. The fourth information includes information for identifying a requesting STA, and/or information indicating that a measurement setup requested to establish by using the first information belongs to the proxy sensing procedure.

According to an eleventh aspect, this application provides an apparatus. The apparatus is implemented in a product form of a chip, and includes an input/output interface and a processing circuit. The apparatus is a chip in a proxy sensing initiator (AP).

In a design, the processing circuit is configured to obtain first measurement setup parameters, where the first measurement setup parameters include parameters used by the proxy sensing initiator (AP) and a sensing responder (STA 3) in a proxy sensing procedure. The input/output interface is configured to output first information, process the first information by using a radio frequency circuit, and send processed first information by using an antenna, where the first information includes the first measurement setup parameters and a first measurement setup identifier, the first measurement setup identifier identifies the first measurement setup parameters, and the first measurement setup identifier is different from measurement setup identifiers used by the proxy sensing initiator (AP).

In a design, the processing circuit is configured to obtain first measurement setup parameters, where the first measurement setup parameters include parameters used by the proxy sensing initiator and a sensing responder in a proxy sensing procedure. The input/output interface is configured to output first information, process the first information by using a radio frequency circuit, and send processed first information by using an antenna, where the first information includes the first measurement setup parameters and a first measurement setup identifier, and the first measurement setup identifier identifies the first measurement setup parameters. If a third measurement setup identifier that identifies measurement setup parameters same as the first measurement setup parameters exists in a first identifier set, the first measurement setup identifier is the third measurement setup identifier, or the first measurement setup identifier does not belong to the first identifier set; or if any measurement setup identifier that identifies measurement setup parameters same as the first measurement setup parameters does not exist in a first identifier set, the first measurement setup identifier does not belong to the first identifier set. The first identifier set includes measurement setup identifiers used by the proxy sensing initiator.

In a design, the processing circuit is configured to obtain first measurement setup parameters, where the first measurement setup parameters include parameters used by the proxy sensing initiator and a sensing responder in a proxy sensing procedure. The input/output interface is configured to output first information, process the first information by using a radio frequency circuit, and send processed first information by using an antenna, where the first information includes the first measurement setup parameters, a first measurement setup identifier, and fourth information; the first measurement setup identifier identifies the first measurement setup parameters; and the fourth information includes information for identifying a requesting STA, and/or information indicating that a measurement setup requested to establish by using the first information belongs to the proxy sensing procedure.

According to a twelfth aspect, this application provides an apparatus. The apparatus is implemented in a product form of a chip, and includes an input/output interface and a processing circuit. The apparatus is a chip in a sensing responder (STA 3). The input/output interface is configured to input first information received by using an antenna and a radio frequency circuit. The processing circuit is configured to obtain, from the first information, first measurement setup parameters, a first measurement setup identifier, and fourth information that are included in the first information. The first measurement setup parameters include parameters used by a proxy sensing initiator (AP) and the sensing responder (STA 3) in a proxy sensing procedure. The first measurement setup identifier identifies the first measurement setup parameters. The fourth information includes information for identifying a requesting STA, and/or information indicating that a measurement setup requested to establish by using the first information belongs to the proxy sensing procedure.

According to a thirteenth aspect, this application provides a computer-readable storage medium. The computer-readable storage medium stores program instructions. When the program instructions are run on a computer, the computer is enabled to perform the measurement setup identifier determining method according to the first aspect or the third aspect.

According to a fourteenth aspect, this application provides a computer-readable storage medium. The computer-readable storage medium stores program instructions. When the program instructions are run on a computer, the computer is enabled to perform the measurement setup method in the proxy sensing procedure according to the fifth aspect or the sixth aspect.

According to a fifteenth aspect, this application provides a computer program product including program instructions. When the computer program product runs on a computer, the computer is enabled to perform the measurement setup identifier determining method according to the first aspect or the third aspect.

According to a sixteenth aspect, this application provides a computer program product including program instructions. When the computer program product runs on a computer, the computer is enabled to perform the measurement setup method in the proxy sensing procedure according to the fifth aspect or the sixth aspect.

According to embodiments of this application, the problem of setting the measurement setup identifier in the proxy sensing scenario can be resolved, so that the measurement setup identifier set in the proxy sensing scenario can be distinguished from the measurement setup identifier set in the common sensing scenario (or the non-proxy sensing scenario).

### BRIEF DESCRIPTION OF DRAWINGS

To describe technical solutions in embodiments of this application more clearly, the following briefly describes accompanying drawings for describing embodiments.
FIG. 1 is a schematic diagram of a sensing procedure according to an embodiment of this application;
FIG. 2 is a schematic diagram of setting a measurement setup identifier according to an embodiment of this application;
FIG. 3 is a schematic diagram of a proxy sensing scenario according to an embodiment of this application;
FIG. 4a is a schematic diagram of a structure of an access point according to an embodiment of this application;
FIG. 4b is a schematic diagram of a structure of a station according to an embodiment of this application;
FIG. 5 is a schematic flowchart of a measurement setup identifier determining method according to an embodiment of this application;
FIG. 6 is another schematic flowchart of a measurement setup identifier determining method according to an embodiment of this application;
FIG. 7 is a schematic flowchart of a measurement setup method in a proxy sensing procedure according to an embodiment of this application;
FIG. 8 is a schematic diagram of a structure of a communication apparatus according to an embodiment of this application; and
FIG. 9 is a schematic diagram of a structure of a communication apparatus 1000 according to an embodiment of this application.

### DESCRIPTION OF EMBODIMENTS

The following clearly and completely describes technical solutions in embodiments of this application with reference to accompanying drawings in embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In descriptions of this application, terms such as "first" and "second" do not limit a quantity and an execution sequence, and the terms such as "first" and "second" do not indicate a definite difference.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

In this application, an element represented in a singular form is intended to represent "one or more", but does not represent "one and only one", unless otherwise specified.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The following briefly describes some content, terms, or nouns related to this application.

### 1. Four roles in a sensing procedure

A sensing initiator (Sensing initiator) is a station that initiates a sensing procedure (a STA that initiates a WLAN sensing procedure).

A sensing responder (Sensing responder) is a station that participates in a sensing procedure initiated by a sensing initiator (a STA that participates in a WLAN sensing procedure initiated by a sensing initiator).

A sensing transmitter (Sensing transmitter) is a station that transmits physical layer (physical layer, PHY) protocol data units (PHY protocol data units, PPDUs) used for sensing measurements in a sensing procedure (a STA that transmits PPDUs used for sensing measurements in a sensing procedure).

A sensing receiver (Sensing receiver) is a station that receives PPDUs sent by a sensing transmitter and performs sensing measurements in a sensing procedure (a STA that receives PPDUs sent by a sensing transmitter and performs sensing measurements in a sensing procedure).

### 2. Sensing procedure (sensing procedure)

The sensing procedure mainly includes five phases:

Sensing session setup (sensing session setup): Sensing session setup is a phase in which a sensing session is set up between stations. Some related parameters can be exchanged in this phase. It should be understood that the sensing session is a protocol reached by a sensing initiator and a sensing responder. One sensing initiator may maintain sensing sessions with a plurality of sensing responders, but the plurality of sensing sessions still need to be set up one by one. For example, the plurality of sensing sessions may be set up simultaneously in an orthogonal frequency division multiple access (orthogonal frequency division multiple access, OFDMA) manner or a multi-user multiple-input multiple-output (multi-user multiple-input multiple-output, MU-MIMO) manner.

Measurement setup (measurement setup): Measurement setup is used by the sensing initiator and the sensing responder to exchange and unify some parameters or features that need to be used in the sensing procedure, such as roles of the sensing initiator and the sensing responder (for example, whether the sensing initiator is a sensing transmitter or a sensing receiver during a sensing measurement, and whether the sensing responder is a sensing transmitter or a sensing receiver during the sensing measurement), and a measurement feedback type.

Measurement instance (measurement instance): The sensing measurement is performed in a measurement instance. One measurement instance allows a plurality of sensing responders to join.

Measurement setup termination (measurement setup termination): Measurement setup termination is used to terminate a measurement setup corresponding to a sensing responder, and the sensing responder is no longer bound to the corresponding measurement setup, but the sensing responder may still be in a sensing session.

Sensing session termination (sensing session termination): Sensing session termination indicates that the sensing session is terminated, and a station does not participate in procedures such as the sensing measurement (sensing measurement).

To describe how the foregoing sensing procedure operates more clearly, the following provides descriptions with reference to the accompanying drawings.

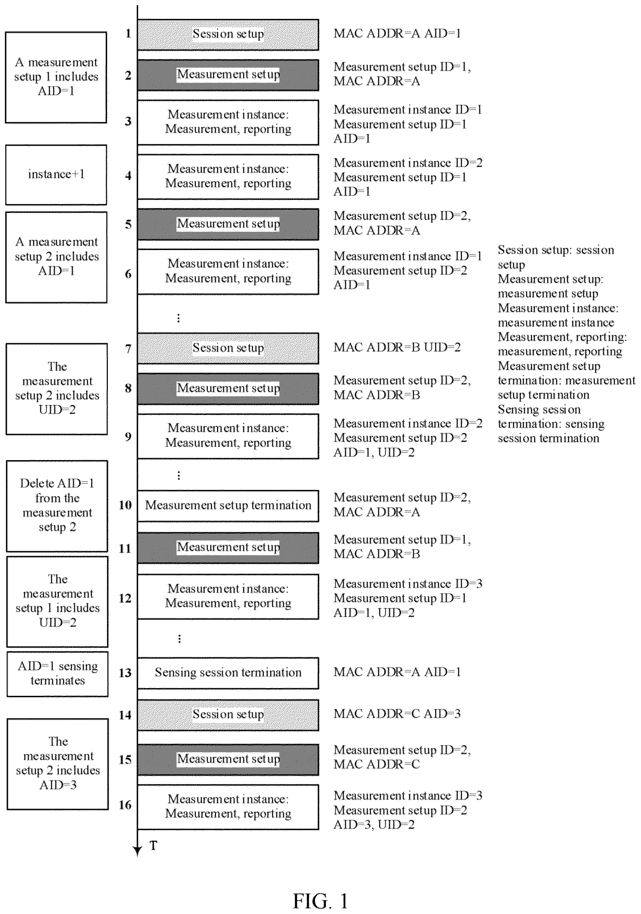

FIG. 1 is a schematic diagram of a sensing procedure according to an embodiment of this application. As shown in FIG. 1, the sensing procedure shown in FIG. 1 includes 16 phases. The 16 phases are merely examples, and may be discontinuous in terms of time. For example, there may be another phase between a phase 6 and a phase 7, which is not shown in FIG. 1. It should be understood that FIG. 1 is merely an example, and in actual application, there may be more or less phases of the sensing procedure than those shown in FIG. 1. A phase 1 indicates that a station whose medium access control (medium access control, MAC) address is A and whose association identifier (association identifier, AID) is 1 participates in a sensing session, that is, a sensing session setup procedure. A phase 2 indicates that related parameters that need to be used in the sensing procedure are configured for the station, that is, a sensing measurement setup. It should be understood that, in the phase 2, to clearly identify different measurement setups, a manner of labeling a sensing measurement setup is used, that is, measurement setup ID=1. In this application, a measurement setup identifier (measurement setup ID) may be understood as identifying a group of parameters or a group of features that need to be used in the sensing procedure for exchange and unification between a sensing initiator and a sensing responder. A phase 3 is a measurement instance. One measurement instance corresponds to one sensing measurement setup identifier (measurement setup ID), in other words, one measurement instance is bound to a group of parameters or features (the group of parameters or features are used for a sensing measurement). Therefore, the station whose AID=1 may perform measurement in the measurement instance. Each measurement instance also has a corresponding label. To sum up, the phases 1, 2, and 3 are used to make the station participate in the sensing session and start measurement and feedback.

A phase 4 indicates that another measurement instance occurs. To distinguish the measurement instance from the previous measurement instance, an identifier of the measurement instance herein is +1, that is, a measurement instance 1 corresponding to a measurement setup 1. Phases 5 and 6 are similar to the phases 2 and 3, and are used to configure another group of related parameters that need to be used in the sensing procedure for the station whose AID=1, to be specific, configure a measurement setup 2 and perform measurement and feedback.

Phases 7, 8, and 9 are similar to the phases 1, 2, and 3. A station whose unassociated station identifier (Unassociated STA ID, UID) is equal to 2 participates in a sensing session, the another group of related parameters that need to be used in the sensing procedure are configured for the station whose UID=2 (the measurement setup 2 is assigned to the station whose UID=2), and then the measurement instance occurs after the measurement setup 2.

A phase 10 indicates that the station whose AID=1 is unbound from the measurement setup 2 (in other words, the station whose AID= 1 is unbound from the another group of related parameters). In this case, the station whose AID=1 is still bound to the measurement setup 1. Phases 11 and 12 indicate that parameters corresponding to the measurement setup ID=1 are configured for the station whose UID=2.

A phase 13 indicates that the station whose AID=1 exits the sensing session.

Phases 14, 15, and 16 are similar to the phases 1, 2, and 3, and indicate that a station whose AID=3 participates in a sensing session and is bound to a measurement setup ID=2. Therefore, in the phase 16, it can be learned that the station whose AID=3 and the station whose UID=2 can participate in sensing measurement and feedback in a measurement instance at the same time.

The four phases, namely, sensing session setup, measurement setup, measurement setup termination, and sensing session termination, are all one-to-one setup phases. The sensing session setup phase is used as an example. One sensing session setup corresponds to one sensing initiator and one sensing responder. Certainly, a sensing initiator may alternatively set up sensing sessions with a plurality of stations at the same time, for example, in an OFDMA or MU-MIMO form, but a plurality of sensing sessions are set up at the same time.

The measurement instance phase is different from the foregoing four phases. One measurement instance may have one-to-many cases, such as one-to-many announcement and triggering.

The measurement instance may be classified into a trigger-based sensing measurement instance (TB sensing measurement instance) and a non-trigger-based sensing measurement instance (Non-TB sensing measurement instance).

The trigger-based sensing measurement instance includes the following phases: a polling phase (Polling phase), a null data packet announcement (null data packet announcement, NDPA) sounding (NDPA sounding) phase, a trigger frame (trigger frame, TF) sounding (TF sounding) phase, and a reporting phase. In the NDP announcement sounding phase, a sensing initiator may use an NDPA (NDP announcement) to notify a corresponding station that the sensing initiator will send an NDP soon. The NDPA is used to notify the station that needs to listen to the NDP and other configuration information, and the corresponding station may measure the subsequently sent NDP to learn of channel information. In the trigger frame sounding phase, the sensing initiator may trigger, by using a trigger frame, a peer end to transmit the NDP, and measure the transmitted NDP to perform sensing. In addition, a function of the polling phase is to confirm that a polled station can participate in measurement and feedback in a current measurement instance.

For the non-trigger-based sensing measurement instance, sending of an NDP of a peer end may be introduced by sending an NDPA or in another manner.

### 3. Setting of the measurement setup identifier (measurement setup ID) in the sensing procedure

In this application, the measurement setup identifier (measurement setup ID) may identify a group of parameters or a group of features that need to be used in the sensing procedure for exchange and unification between a sensing initiator and a sensing responder.

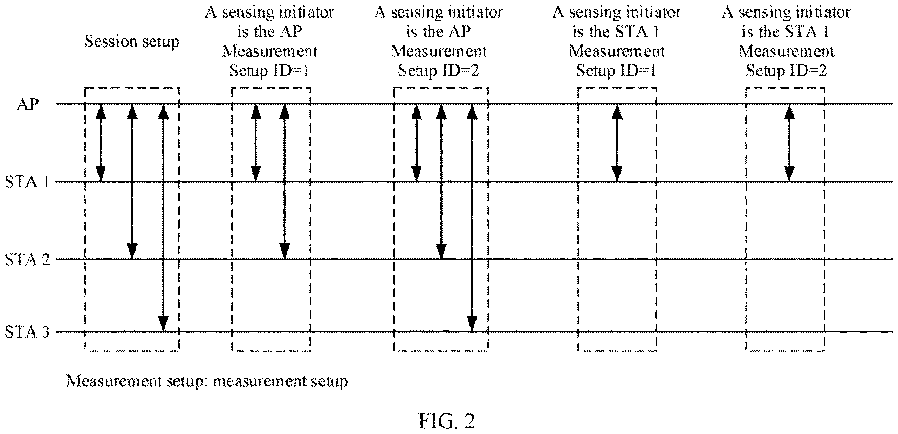

A measurement setup ID between two devices may be set by a sensing initiator. FIG. 2 is a schematic diagram of setting a measurement setup identifier according to an embodiment of this application. As shown in FIG. 2, FIG. 2 shows settings of measurement setup identifiers when sensing initiators are different. The second dashed-line box and the fourth dashed-line box from left to right in FIG. 2 are used as examples. In the second dashed-line box from left to right in FIG. 2, an AP is used as a sensing initiator. In the fourth dashed-line box from left to right in FIG. 2, a STA 1 is used as a sensing initiator. Both measurement setup IDs between the AP and the STA 1 may be 1, even if parameters or features identified by the measurement setup IDs are inconsistent. This is because address fields in PPDUs sent by the sensing initiators carry MAC addresses (MAC Addresses) of the sensing initiators, and a sensing responder can distinguish different measurement setups by identifying <the MAC addresses of the sensing initiators, measurement setup IDs>. Therefore, although the same measurement setup ID is used between the AP and the STA 1, the sensing responder can distinguish different measurement setups without conflict. To be specific, the sensing responder may distinguish the measurement setups between the AP and the STA 1 by using <MAC Address of the AP, measurement setup ID=1> and <MAC Address of the STA 1, measurement setup ID=1>.

It should be understood that there may be two manners for setting up a session between the two devices shown in FIG. 2. A session setup between the AP and the STA 1 in FIG. 2 is used as an example. The session setup between the AP and the STA 1 may be a sensing session set up by using the AP as the sensing initiator, or may be a sensing session set up by using the STA 1 as the sensing initiator. In this case, a measurement setup indicated by the third dashed-line from left to right in FIG. 2 may occur after the sensing session is set up by using the AP as the sensing initiator, or may occur after the sensing session is set up by using the STA 1 as the sensing initiator. In other words, a specific session setup manner is not limited in this embodiment of this application, or a sensing initiator in a session setup procedure is not limited in this embodiment of this application to be necessarily the same as or different from a sensing initiator in a measurement setup procedure.

Because a current protocol does not support sensing between two non-access point stations (non-access point stations, non-AP STAs), there is a special scenario in the sensing procedure, to be specific, a STA wants an AP help complete measurement with another sensing responder. For example, a device in a room wants an AP to help the device feed back channel state information (channel state information, CSI) of devices connected to the AP in all rooms in a home. This special scenario is referred to as a proxy sensing scenario.

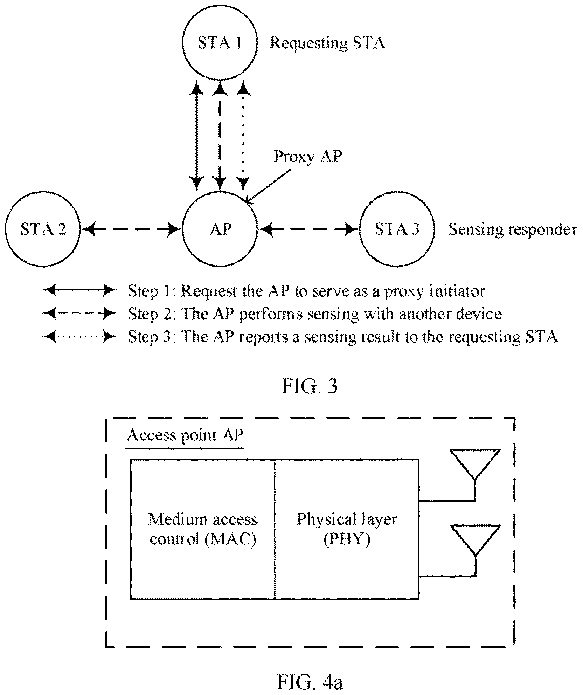

In order to support this special scenario (in other words, to support the proxy sensing scenario) in the sensing procedure, a proxy sensing procedure is proposed. FIG. 3 is a schematic diagram of a proxy sensing scenario according to an embodiment of this application. As shown in FIG. 3, the proxy sensing scenario includes a requesting STA (a STA 1 in FIG. 3), a proxy (an AP in FIG. 3)/proxy AP (proxy AP), and a sensing responder (a STA 2 and/or a STA 3 in FIG. 3). With reference to the proxy sensing scenario shown in FIG. 3, a proxy sensing procedure may be described as: The requesting STA (requesting STA, or a sensing by proxy requesting station (SBP requesting STA), SBP=sensing by proxy) may request the AP to serve as a proxy of the requesting STA to perform measurement; the AP performs sensing with the sensing responder (for example, the STA 2 or the STA 3); and the AP reports sensing information to the requesting STA. A sensing procedure between the AP and the requesting STA may exist or may not exist. When the sensing procedure between the AP and the requesting STA exists, the requesting STA may also serve as a sensing responder in the sensing procedure.

In this application, the requesting STA may be understood as an initial sensing initiator, and the AP may be understood as a proxy sensing initiator (or directly referred to as a "proxy (proxy)" for short).

In the proxy sensing scenario shown in FIG. 3, when the AP participates in non-proxy sensing (for example, the AP serves as a sensing initiator to perform sensing with the STA 3), and participates in proxy sensing (for example, the AP serves as a proxy of the STA 1 to perform sensing with the STA 3), because each of MAC addresses of the sensing initiators carried in PPDUs sent by the AP is a MAC address of the AP, if a measurement setup is identified only by using <MAC Address, measurement setup ID>, the sensing responder cannot distinguish different measurement setups corresponding to the same measurement setup ID, and therefore cannot determine parameters/features identified by the measurement setup ID, which affects a subsequent sensing measurement procedure. In other words, a method for setting a measurement setup identifier in a non-proxy sensing procedure is not applicable to the proxy sensing scenario. Therefore, how to set the measurement setup identifier in the proxy sensing scenario is an urgent problem to be resolved.

Therefore, embodiments of this application provide a measurement setup identifier determining method, to resolve a problem of setting a measurement setup identifier (measurement setup ID) in a proxy sensing scenario, so that the measurement setup identifier set in the proxy sensing scenario can be distinguished from a measurement setup identifier set in a non-proxy sensing scenario. In other words, according to the measurement setup identifier determining method provided in embodiments of this application, a sensing responder can distinguish different measurement setups based on measurement setup identifiers. In other words, the sensing responder can uniquely determine, by using the measurement setup identifier, a group of parameters/features used for sensing measurement.

The technical solutions provided in this application may be applied to the proxy sensing scenario shown in FIG. 3. An apparatus for implementing the method in this application may be an AP or a STA in a WLAN, or a chip or processing system disposed in the AP or the STA.

The access point (for example, the AP in FIG. 3) is an apparatus having a wireless communication function, supports communication by using a WLAN protocol, has a function of communicating with another device (for example, a station or another access point) in the WLAN network, and certainly, may further have a function of communicating with another device. In a WLAN system, an access point may be referred to as an access point station (access point station, AP STA). The apparatus having the wireless communication function may be an entire device, or may be a chip or processing system installed in the entire device. A device in which the chip or the processing system is installed may implement the methods and the functions in embodiments of this application under control of the chip or the processing system. The AP in embodiments of this application is an apparatus that provides a service for a STA, and may support the 802.11 series protocols. For example, the AP may be a communication entity, for example, a communication server, a router, a switch, or a bridge. The AP may include a macro base station, a micro base station, a relay station, and the like in various forms. Certainly, the AP may alternatively be a chip or processing system in these devices in various forms, to implement the methods and the functions in embodiments of this application.

The station (for example, the STA 1, the STA 2, or the STA 3 in FIG. 3) is an apparatus having a wireless communication function, supports communication by using the WLAN protocol, and has a capability of communicating with another station or an access point in the WLAN network. In the WLAN system, a station may be referred to as a non-access point station (non-access point station, non-AP STA). For example, the STA is any user communication device that allows a user to communicate with an AP and further communicate with the WLAN. The apparatus having the wireless communication function may be an entire device, or may be a chip or processing system installed in the entire device. A device in which the chip or the processing system is installed may implement the methods and the functions in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone. Alternatively, the STA may be an internet of things node in the internet of things, an in-vehicle communication apparatus in the internet of vehicles, an entertainment device, a game device or system, a global positioning system device, or the like. The STA may alternatively be a chip and a processing system in the foregoing terminals.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops, and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, augmented reality (augmented reality, AR), virtual reality (virtual reality, VR), or another wearable device), a smart device in smart office (for example, a printer, a projector, a loudspeaker, or a stereo), an internet of vehicle device in the internet of vehicle, infrastructure (for example, a vending machine, a self-service navigation station of a supermarket, a self-service cash register device, or a self-service ordering machine) in daily life scenarios, a device in a large sports and music venue, or the like. Specific forms of the STA and the AP are not limited in embodiments of this application, and are merely examples for description herein.

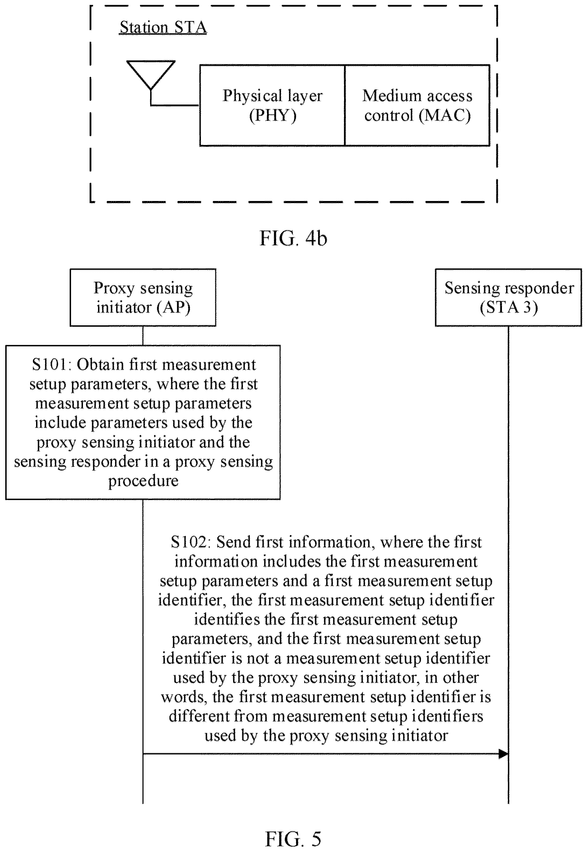

It should be understood that the 802.11 standard focuses on a physical layer (physical layer, PHY) and a medium access control (medium access control, MAC) layer. In an example, refer to FIG. 4a. FIG. 4a is a schematic diagram of a structure of an access point according to an embodiment of this application. The AP may be a multi-antenna/multi-radio-frequency, or may be a single-antenna/single-radio-frequency. The antenna/radio frequency is used to send/receive a data packet (the data packet in this specification may also be referred to as a physical layer protocol data unit (PHY protocol data unit, PPDU)). In an implementation, an antenna or a radio frequency part of the AP may be separated from a main body of the AP, that is, may be remotely disposed. In FIG. 4a, the AP may include a physical layer processing circuit and a medium access control processing circuit. The physical layer processing circuit may be configured to process a physical layer signal, and the MAC layer processing circuit may be configured to process a MAC layer signal. In another example, refer to FIG. 4b. FIG. 4b is a schematic diagram of a structure of a station according to an embodiment of this application. FIG. 4b is a schematic diagram of the structure of the STA of single-antenna/single-radio-frequency. In an actual scenario, the STA may be multi-antenna/multi-radio-frequency, and may be a device with more than two antennas. The antenna/radio frequency is used to send/receive a data packet. In an implementation, an antenna or a radio frequency part of the STA may be separated from a main body of the STA, that is, may be remotely disposed. In FIG. 4b, the STA may include a PHY processing circuit and a MAC processing circuit. The physical layer processing circuit may be configured to process a physical layer signal, and the MAC layer processing circuit may be configured to process a MAC layer signal.

The following describes in detail the technical solutions provided in this application with reference to more accompanying drawings.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

Optionally, the proxy sensing initiator in this application may be the AP shown in FIG. 3, the requesting STA in this application may be the STA 1 shown in FIG. 3, and the sensing responder in this application may be the STA 3 or the STA 2 shown in FIG. 3. In this application, the proxy sensing initiator, the requesting STA, and the sensing responder all support a WLAN sensing protocol, such as 802.1 1bf or a next generation protocol of 802.11bf.

### Embodiment 1

FIG. 5 is a schematic flowchart of a measurement setup identifier determining method according to an embodiment of this application. The measurement setup identifier determining method may be applied to the proxy sensing scenario shown in FIG. 3. The method mainly describes how a measurement setup ID set in a proxy sensing procedure is distinguished from an existing measurement setup ID set at an AP. As shown in FIG. 5, the measurement setup identifier determining method includes but is not limited to the following steps.

S101: A proxy sensing initiator (AP) obtains first measurement setup parameters, where the first measurement setup parameters include parameters used by the proxy sensing initiator and a sensing responder in the proxy sensing procedure.

In an implementation, a requesting STA (for example, the STA 1 in FIG. 3) may request the AP to serve as a proxy (proxy) of the requesting STA to perform sensing measurement. The requesting STA may further send, to the AP (proxy sensing initiator), related parameters (denoted as second measurement setup parameters) of a measurement setup that the requesting STA wants to establish. The measurement setup parameters in this application are used for sensing measurement, for example, parameters such as a role of the proxy sensing initiator, a role of the sensing responder, a bandwidth, and a measurement feedback type. After receiving the second measurement setup parameters, the AP (proxy sensing initiator) may negotiate with the requesting STA to determine parameters (that is, the first measurement setup parameters) that are finally used by the proxy sensing initiator (AP) and the sensing responder (for example, the STA 3 in FIG. 3) in the proxy sensing procedure. For example, after receiving the second measurement setup parameters, the AP (proxy sensing initiator) determines third measurement setup parameters based on the second measurement setup parameters, and sends the determined third measurement setup parameters to the requesting STA. If the requesting STA agrees with the third measurement setup parameters, the requesting STA sends consent information to the AP (proxy sensing initiator). After receiving the consent information, the AP (proxy sensing initiator) uses the third measurement setup parameters as the first measurement setup parameters. If the requesting STA does not agree with the third measurement setup parameters, the requesting STA may send new measurement setup parameters (the new measurement setup parameters are different from the second measurement setup parameters and the third measurement setup parameters) to the AP (proxy sensing initiator). After receiving the new measurement setup parameters, if the AP (proxy sensing initiator) agrees to use the new measurement setup parameters, the AP (proxy sensing initiator) uses the new measurement setup parameters as the first measurement setup parameters. If the AP (proxy sensing initiator) does not agree to use the new measurement setup parameters, the AP (proxy sensing initiator) and the requesting STA may continue to negotiate until they reach a consensus.

The second measurement setup parameters include all or a part of the parameters used by the proxy sensing initiator (AP) and the sensing responder (for example, the STA 3) in the proxy sensing procedure. For example, the second measurement setup parameters include the parameters such as the role of the proxy sensing initiator, the role of the sensing responder, the bandwidth, and the measurement feedback type. It should be understood that, if the second measurement setup parameters include the part of the parameters used by the proxy sensing initiator and the sensing responder in the proxy sensing procedure, the AP may negotiate a remaining part of parameters with the requesting STA, or may negotiate all of the parameters with the requesting STA.

Optionally, the second measurement setup parameters may be carried in a request message sent by the requesting STA (STA 1) to the AP, or may be carried in independent information/frame. This is not limited in this embodiment of this application.

Optionally, when sending, to the AP (proxy sensing initiator), the related parameters (that is, the second measurement setup parameters) of the measurement setup that the requesting STA wants to establish, the requesting STA may further send a measurement setup identifier (the measurement setup identifier is set by the requesting STA, and the measurement setup identifier is denoted as a second measurement setup identifier) at the same time. In other words, the second measurement setup parameters and the second measurement setup identifier may be carried in one piece of information/frame, for example, in second information. Certainly, the second measurement setup parameters and the second measurement setup identifier may be carried in different information/frames. The second measurement setup identifier may identify the first measurement setup parameters determined by the AP (proxy sensing initiator) through negotiation with the requesting STA. It should be understood that, before the AP (proxy sensing initiator) negotiates with the requesting STA to determine the first measurement setup parameters, or in a negotiation process between the AP and the requesting STA, the second measurement setup identifier alternatively identifies the second measurement setup parameters (that is, the related parameters that are of the measurement setup, that the requesting STA wants to establish, and that are sent by the STA to the AP) and measurement setup parameters (such as the foregoing third measurement setup parameters and the foregoing new measurement setup parameters) in the negotiation process. When and after the AP negotiates with the requesting STA to determine the first measurement setup parameters, the requesting STA and the AP continue to use the second measurement setup identifier to identify the first measurement setup parameters finally determined through negotiation.

In this way, when the requesting STA wants the AP to establish a plurality of measurement setups on behalf of the requesting STA, to be specific, when the requesting STA needs the AP to feed back channel state information corresponding to a plurality of groups of measurement setup parameters, the requesting STA notifies the AP (proxy sensing initiator) of the second measurement setup identifier, so that when feeding back the channel state information, the AP can distinguish channel state information corresponding to different measurement setup parameters for the requesting STA based on the measurement setup identifier notified by the requesting STA, thereby preventing the requesting STA from confusing the received channel state information.

It should be understood that, if the requesting STA may request only one measurement setup from the AP (proxy sensing initiator), the requesting STA may not need to set the second measurement setup identifier for the first measurement setup parameters. This is because all channel state information received by the requesting STA is channel state information corresponding to the first measurement setup parameters, and no confusion is generated.

In another implementation, a requesting STA (for example, the STA 1 in FIG. 3) may request the AP to serve as a proxy (proxy) of the requesting STA to perform sensing measurement. The requesting STA may further send second information to the AP (proxy sensing initiator), where the second information includes the parameters used by the proxy sensing initiator (AP) and the sensing responder (for example, the STA 3 in FIG. 3) in the proxy sensing procedure. In other words, the first information includes the first measurement setup parameters. In other words, related parameters of a measurement setup that the requesting STA wants to establish and that are sent by the requesting STA to the AP (proxy sensing initiator) are the first measurement setup parameters. The AP (proxy sensing initiator) receives the first information, and obtains the first measurement setup parameters. In other words, the requesting STA directly notifies the AP (proxy sensing initiator) of the related parameters of the measurement setup that the requesting STA wants to establish, and the AP (proxy sensing initiator) does not need to negotiate with the requesting STA about the related parameters because the AP (proxy sensing initiator) cannot modify the related parameters. The first measurement setup parameters may include parameters such as a role of the proxy sensing initiator, a role of the sensing responder, a bandwidth, and a measurement feedback type.

Optionally, the second information may be carried in a request message sent by the requesting STA (STA 1) to the AP, or may be carried in independent information/frame. This is not limited in this embodiment of this application.

Optionally, when sending the first measurement setup parameters to the AP (proxy sensing initiator), the requesting STA may further send a measurement setup identifier (the measurement setup identifier is set by the requesting STA, and the measurement setup identifier is denoted as a second measurement setup identifier) at the same time. In other words, the second information may further include the second measurement setup identifier. Certainly, the second measurement setup identifier and the first measurement setup parameters may alternatively be located in different information/frames. The second measurement setup identifier may identify the first measurement setup parameters. In other words, the requesting STA and the AP (proxy sensing initiator) use the second measurement setup identifier to identify the first measurement setup parameters.

In still another implementation, a requesting STA (for example, the STA 1 in FIG. 3) requests the AP to serve as a proxy (proxy) of the requesting STA to perform sensing measurement. After receiving a request of the requesting STA, the AP (that is, the proxy sensing initiator) may determine the parameters used by the AP (proxy sensing initiator) and the sensing responder (for example, the STA 3 in FIG. 3) in the proxy sensing procedure, in other words, determine the first measurement setup parameters. The first measurement setup parameters may include parameters such as a role of the proxy sensing initiator, a role of the sensing responder, a bandwidth, and a measurement feedback type.

Optionally, after determining the first measurement setup parameters, the AP (that is, the proxy sensing initiator) may notify the requesting STA. After receiving the first measurement setup parameters, the requesting STA may further set a measurement setup identifier, that is, a second measurement setup identifier, for the first measurement setup parameters, and notify the AP (that is, the proxy sensing initiator) of the second measurement setup identifier.

Optionally, when the requesting STA requests the AP to serve as the proxy of the requesting STA to perform sensing measurement, the measurement setup identifier (denoted as the second measurement setup identifier) may be carried. After receiving the request of the requesting STA, the AP (proxy sensing initiator) determines the first measurement setup parameters, and notifies the requesting STA of both the first measurement setup parameters and/or the second measurement setup identifier. In other words, the requesting STA sets the measurement setup identifier (that is, the second measurement setup identifier) when requesting the AP to serve as the proxy of the requesting STA. In this case, the second measurement setup identifier does not identify any parameter, or a parameter identified by the second measurement setup identifier is an empty set. When the requesting STA receives the first measurement setup parameters sent by the AP (proxy sensing initiator), or when the requesting STA receives the first measurement setup parameters and the second measurement setup identifier that are sent by the AP (proxy sensing initiator), the requesting STA may learn that the second measurement setup identifier identifies the first measurement setup parameters.

S 102: The proxy sensing initiator (AP) sends first information to the sensing responder (STA 3), where the first information includes the first measurement setup parameters and a first measurement setup identifier, the first measurement setup identifier identifies the first measurement setup parameters, and the first measurement setup identifier is not a measurement setup identifier used by the proxy sensing initiator, in other words, the first measurement setup identifier is different from measurement setup identifiers used by the proxy sensing initiator.

Optionally, after obtaining the first measurement setup parameters, the AP (proxy sensing initiator) may set a measurement setup identifier (denoted as the first measurement setup identifier) for the first measurement setup parameters, and the measurement setup identifier identifies the first measurement setup parameters. The first measurement setup identifier is not the measurement setup identifier used by the AP (proxy sensing initiator), in other words, the first measurement setup identifier is different from the measurement setup identifiers used by the AP (proxy sensing initiator). In other words, when identifying a measurement setup in the proxy sensing procedure, the AP serving as the proxy needs to re-use a measurement setup ID different from existing measurement setup IDs at the AP. The measurement setup identifiers used by the AP (proxy sensing initiator) may include a measurement setup identifier used by the AP (proxy sensing initiator) in a sensing procedure (herein, which is a non-proxy sensing procedure), and/or a measurement setup identifier used by the AP (proxy sensing initiator) in the proxy sensing procedure. In other words, the existing measurement setup IDs at the AP include an established measurement setup ID set by the AP as an initiator (initiator) in the proxy sensing procedure, and an established measurement setup ID set by the AP as an initiator in the non-proxy sensing procedure.

Optionally, after setting the first measurement setup identifier for the first measurement setup parameters, the AP (proxy sensing initiator) may send one piece of information (denoted as the first information) including the first measurement setup parameters and the first measurement setup identifier to the sensing responder (for example, the STA 3 in FIG. 3). In other words, the AP (proxy sensing initiator) and the sensing responder (for example, the STA 3) use the first measurement setup identifier to identify the first measurement setup parameters. After receiving the first information, the sensing responder (for example, the STA 3) may establish an association relationship between the first measurement setup parameters and the first measurement setup identifier, so that the first measurement setup parameters can be uniquely indexed by using the first measurement setup identifier in a subsequent sensing measurement procedure.

Optionally, if the requesting STA sets the second measurement setup identifier for the first measurement setup parameters and notifies the AP (proxy sensing initiator), a mapping relationship may exist in the AP (proxy sensing initiator). To be specific, the first measurement setup identifier set by the AP (proxy sensing initiator) for the first measurement setup parameters corresponds to the second measurement setup identifier set by the requesting STA for the first measurement setup parameters. In an optional embodiment, the AP (proxy sensing initiator) may alternatively notify the requesting STA and/or the sensing responder (for example, the STA 3) of the mapping relationship between the first measurement setup identifier and the second measurement setup identifier. Correspondingly, the AP (proxy sensing initiator) may alternatively notify the sensing responder (for example, the STA 3) of the second measurement setup identifier, and/or the AP (proxy sensing initiator) may further notify the requesting STA of the first measurement setup identifier.

It should be understood that both the first measurement setup identifier and the second measurement setup identifier identify the first measurement setup parameters. When the requesting STA exchanges content related to the first measurement setup identifier with the AP (proxy sensing initiator), the AP (proxy sensing initiator) and the STA 3 (sensing responder) use the second measurement setup identifier to indicate the related content.

If the second measurement setup identifier is not a measurement setup identifier used by the AP (proxy sensing initiator), in other words, if the second measurement setup identifier is different from the measurement setup identifiers used by the AP (proxy sensing initiator), the AP (proxy sensing initiator) may alternatively directly use the second measurement setup identifier as the first measurement setup identifier. In other words, in this case, the first measurement setup identifier is the same as the second measurement setup identifier. For example, the second measurement setup identifier is a first ID, and the first measurement setup identifier is a second ID. If the existing measurement setup ID set at the AP includes the first ID, the second ID does not belong to the existing measurement setup ID set at the AP. If the existing measurement setup IDs at the AP do not include the first ID, the AP may still use the first ID, and in this case, the second ID equals the first ID. Certainly, even if the second measurement setup identifier is not the measurement setup identifier used by the AP (proxy sensing initiator), the AP (proxy sensing initiator) may alternatively randomly select a value that is not the measurement setup identifier used by the AP (proxy sensing initiator) as the first measurement setup identifier. In other words, in this case, the first measurement setup identifier and the second measurement setup identifier may alternatively be different.

Optionally, after step S 102, the measurement setup identifier determining method may further include: The proxy sensing initiator (AP) sends third information to the sensing responder (for example, the STA 3 in FIG. 3), where the third information includes the first measurement setup identifier. Optionally, in addition to carrying the first measurement setup identifier, the third information may further carry a part of parameters in the first measurement setup parameters, for example, the bandwidth. The foregoing step S101 and step S102 may be understood as a measurement setup procedure, and the first information may be understood as information in the measurement setup procedure. The third information may be information in sensing procedures such as measurement instance and measurement setup termination. In other words, the foregoing manner of identifying the measurement setup (in other words, when the AP serving as the proxy identifies the measurement setup in the proxy sensing procedure, the AP needs to re-use the measurement setup ID different from the existing measurement setup IDs at the AP) is applicable to the measurement setup procedure, and is also applicable to the sensing procedures such as the measurement instance and the measurement setup termination.

In this embodiment of this application, it is restricted that the measurement setup ID set in the proxy sensing procedure does not belong to the existing measurement setup ID set at the AP, so that a problem of setting a measurement setup identifier in the proxy sensing scenario can be resolved. In addition, the measurement setup identifier set in the proxy sensing scenario is distinguished from a measurement setup identifier set in a common sensing scenario (or a non-proxy sensing scenario), thereby avoiding confusion and avoiding affecting a subsequent sensing measurement procedure. An identification manner of the sensing responder may further be reused, in other words, the sensing responder may still identify a corresponding measurement setup by using <MAC Address, measurement setup ID>. The MAC address herein is a MAC address of the proxy sensing initiator (AP), that is, a proxy AP MAC address.

It should be understood that, for the proxy sensing initiator (AP), the MAC address for identifying a measurement setup parameter in <Initiator MAC Address, measurement setup ID> may be carried in fields such as a transmitter address (transmission address, TA) and a source address (source address, SA) of a sent PPDU. However, for the sensing responder (for example, the STA 3), the MAC address of the initiator may be carried in fields such as a receiver address (receive address, RA) and a destination address (destination address, DA) of a PPDU sent by the sensing responder. The initiator MAC address herein is the MAC address of the proxy AP, that is, the proxy AP MAC address. It should be further understood that, in this application, although MAC addresses are used to participate in distinguishing measurement setups, a part or all of MAC addresses may be transmitted during transmission, but not necessarily all of the MAC addresses. This is the same in the following, and details are not described again.

### Embodiment 2

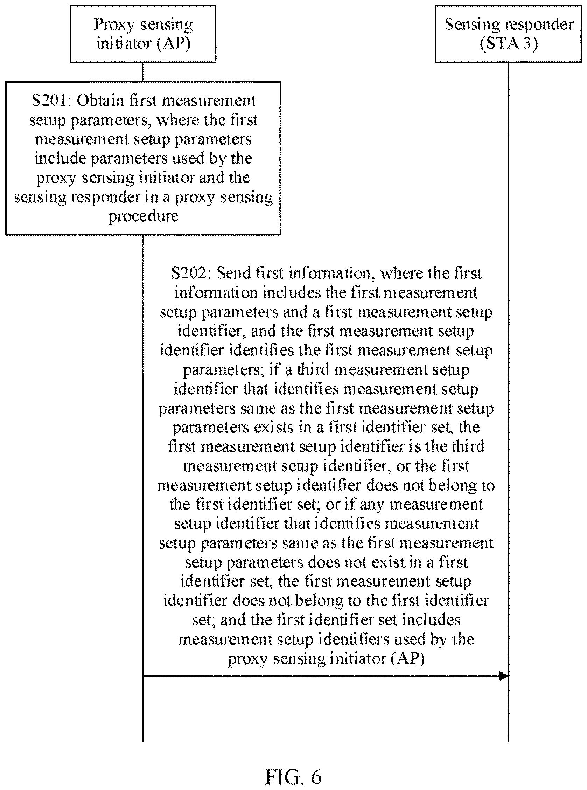

FIG. 6 is another schematic flowchart of a measurement setup identifier determining method according to an embodiment of this application. The measurement setup identifier determining method may be applied to the proxy sensing scenario shown in FIG. 3. This method mainly provides description that a measurement setup ID set in a proxy sensing procedure may belong to an existing measurement setup ID set at an AP. Whether the measurement setup ID set in the proxy sensing procedure may belong to the existing measurement setup ID set is determined on a basis that corresponding measurement setup parameters are consistent. As shown in FIG. 6, the measurement setup identifier determining method includes but is not limited to the following steps.

S201: A proxy sensing initiator (AP) obtains first measurement setup parameters, where the first measurement setup parameters include parameters used by the proxy sensing initiator and a sensing responder in the proxy sensing procedure.

Optionally, for an implementation of step S201 in this embodiment of this application, refer to an implementation of step S101 in Embodiment 1 (that is, the embodiment shown in FIG. 5). Details are not described herein again.

S202: The proxy sensing initiator (AP) sends first information to the sensing responder (STA 3), where the first information includes the first measurement setup parameters and a first measurement setup identifier, and the first measurement setup identifier identifies the first measurement setup parameters; if a third measurement setup identifier that identifies measurement setup parameters same as the first measurement setup parameters exists in a first identifier set, the first measurement setup identifier is the third measurement setup identifier, or the first measurement setup identifier does not belong to the first identifier set; or if any measurement setup identifier that identifies measurement setup parameters same as the first measurement setup parameters does not exist in a first identifier set, the first measurement setup identifier does not belong to the first identifier set; and the first identifier set includes measurement setup identifiers used by the proxy sensing initiator (AP).

Optionally, after obtaining the first measurement setup parameters, the AP (proxy sensing initiator) may set a measurement setup identifier (denoted as the first measurement setup identifier) for the first measurement setup parameters, and the measurement setup identifier identifies the first measurement setup parameters. Specifically, the AP (proxy sensing initiator) may detect whether the measurement setup identifier that identifies the measurement setup parameters same as the first measurement setup parameters exists in the first identifier set (that is, a measurement setup identifier set used by the proxy sensing initiator (AP)). If the third measurement setup identifier that identifies the measurement setup parameters same as the first measurement setup parameters exists in the first identifier set, the AP (proxy sensing initiator) may use the third measurement setup identifier as the first measurement setup identifier, or the AP (proxy sensing initiator) may select a value that is not in the first identifier set as the first measurement setup identifier. In other words, when the measurement setup parameters identified by the third measurement setup identifier in the first identifier set are the same as the first measurement setup parameters, the first measurement setup identifier is the third measurement setup identifier, or the first measurement setup identifier does not belong to the first identifier set. If the any measurement setup identifier that identifies the measurement setup parameters same as the first measurement setup parameters does not exist in the first identifier set, the AP (proxy sensing initiator) may select a value that is not in the first identifier set as the first measurement setup identifier. In other words, when the any measurement setup identifier that identifies the measurement setup parameters same as the first measurement setup parameters does not exist in the first identifier set, the first measurement setup identifier does not belong to the first identifier set. The first identifier set includes the measurement setup identifiers used by the proxy sensing initiator (AP). The measurement setup identifiers used by the AP (proxy sensing initiator) may include a measurement setup identifier used by the AP (proxy sensing initiator) in a sensing procedure (herein, which is a non-proxy sensing procedure), and/or a measurement setup identifier used by the AP (proxy sensing initiator) in the proxy sensing procedure.

In other words, when the AP serving as a proxy identifies a measurement setup in the proxy sensing procedure, the AP may use existing measurement setup IDs at the AP to identify the measurement setup. Whether the existing measurement setup IDs at the AP can identify the measurement setup depends on whether parameters corresponding to the existing measurement setup IDs between the AP (proxy sensing initiator) and the sensing responder (for example, STA 3) are consistent with parameters (herein, which are the first measurement setup parameters) corresponding to a measurement setup that a requesting STA (for example, STA 1) wants to establish. If the parameters corresponding to the existing measurement setup IDs between the AP (proxy sensing initiator) and the sensing responder (for example, STA 3) are consistent with the parameters (herein, which are the first measurement setup parameters) corresponding to the measurement setup that the requesting STA (for example, STA 1) wants to establish, the existing measurement setup IDs at the AP can be reused. If the parameters corresponding to the existing measurement setup IDs between the AP (proxy sensing initiator) and the sensing responder (for example, STA 3) are not consistent with the parameters (herein, which are the first measurement setup parameters) corresponding to the measurement setup that the requesting STA (for example, STA 1) wants to establish, a new number is created to identify the new measurement setup. The existing measurement setup IDs at the AP include an established measurement setup ID set by the AP as an initiator (initiator) in the proxy sensing procedure, and an established measurement setup ID set by the AP as an initiator in a non-proxy sensing procedure.

Optionally, after setting the first measurement setup identifier for the first measurement setup parameters, the AP (proxy sensing initiator) may send one piece of information (denoted as the first information) including the first measurement setup parameters and the first measurement setup identifier to the sensing responder (for example, the STA 3 in FIG. 3). In other words, the first measurement setup parameters are identified between the AP (proxy sensing initiator) and the sensing responder (for example, the STA 3) by using the first measurement setup identifier. After receiving the first information, the sensing responder (for example, the STA 3) may establish an association relationship between the first measurement setup parameters and the first measurement setup identifier, so that the first measurement setup parameters can be uniquely indexed by using the first measurement setup identifier in a subsequent sensing measurement procedure.

Optionally, if the requesting STA sets a second measurement setup identifier for the first measurement setup parameters and notifies the AP (proxy sensing initiator), a mapping relationship may exist in the AP (proxy sensing initiator), to be specific, the first measurement setup identifier corresponds to the second measurement setup identifier. In an optional embodiment, the AP (proxy sensing initiator) may alternatively notify the requesting STA and/or the sensing responder (for example, the STA 3) of the mapping relationship between the first measurement setup identifier and the second measurement setup identifier. Correspondingly, the AP (proxy sensing initiator) may alternatively notify the sensing responder (for example, the STA 3) of the second measurement setup identifier, and/or the AP (proxy sensing initiator) may further notify the requesting STA of the first measurement setup identifier.

It should be understood that both the first measurement setup identifier and the second measurement setup identifier identify the first measurement setup parameters. When the requesting STA exchanges content related to the first measurement setup identifier with the AP (proxy sensing initiator), the AP (proxy sensing initiator) and the STA 3 (sensing responder) use the second measurement setup identifier to indicate the related content.

If the second measurement setup identifier is not a measurement setup identifier in the first identifier set, in other words, if the second measurement setup identifier is different from any measurement setup identifier in the first identifier set, the AP (proxy sensing initiator) may directly use the second measurement setup identifier as the first measurement setup identifier. In other words, in this case, the first measurement setup identifier is the same as the second measurement setup identifier.

Optionally, after step S202, the measurement setup identifier determining method may further include: The proxy sensing initiator (AP) sends third information to the sensing responder (for example, the STA 3 in FIG. 3), where the third information includes the first measurement setup identifier. In other words, a manner in which the AP (proxy sensing initiator) sets a measurement setup identifier for the first measurement setup parameters is applicable to a measurement setup procedure, and is also applicable to sensing procedures such as measurement instance and measurement setup termination. Optionally, in addition to carrying the first measurement setup identifier, the third information may further carry a part of parameters in the first measurement setup parameters, for example, a bandwidth.

In this embodiment of this application, the proxy AP (that is, the proxy sensing initiator) determines whether to use an ID in the existing measurement setup ID set at the AP depends on whether the parameters (that is, the first measurement setup parameters) corresponding to the measurement setup in the proxy sensing procedure requested by the requesting STA are the same as the parameters corresponding to the measurement setup ID in the existing measurement setup ID set (that is, the first identifier set) at the proxy AP. In an aspect, a problem of setting a measurement setup identifier in the proxy sensing scenario can be resolved, and measurement setup identifiers in different scenarios can be distinguished, thereby avoiding confusion. In another aspect, an identification manner of the sensing responder may be reused, to be specific, the sensing responder may still identify a corresponding measurement setup by using <MAC Address, measurement setup ID>. In still another aspect, ID resources can be saved. The MAC address herein is a MAC address of the proxy sensing initiator (AP), that is, a proxy AP MAC address.

### Embodiment 3

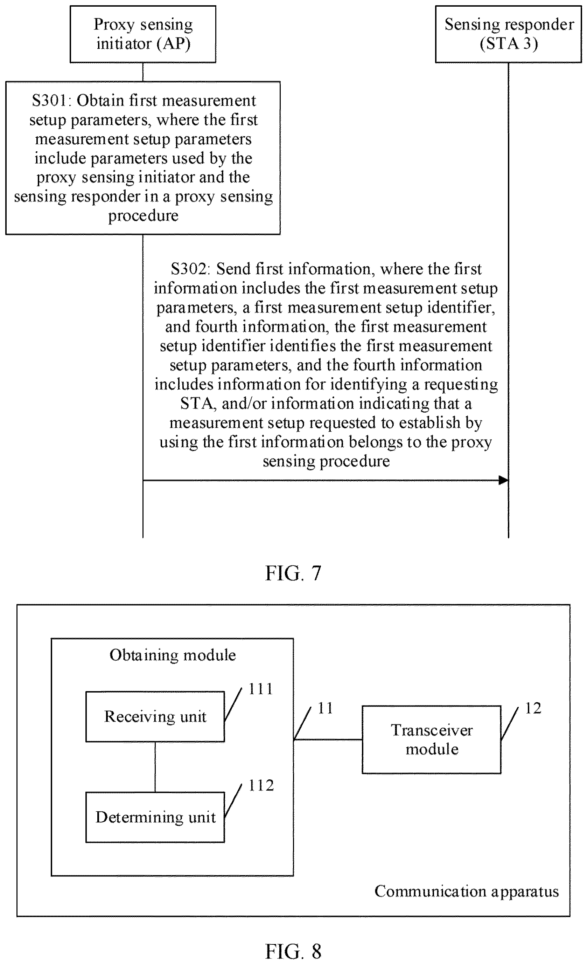

FIG. 7 is a schematic flowchart of a measurement setup method in a proxy sensing procedure according to an embodiment of this application. The measurement setup method in the proxy sensing procedure may be applied to the proxy sensing scenario shown in FIG. 3. The method mainly provides descriptions that an AP sends a measurement setup ID carrying more information (such as sensing by proxy (SBP) related information and requesting STA related information), so that the measurement setup ID is completely independently set in the proxy sensing procedure. As shown in FIG. 7, the measurement setup method in the proxy sensing procedure includes but is not limited to the following steps.

S301: A proxy sensing initiator (AP) obtains first measurement setup parameters, where the first measurement setup parameters include parameters used by the proxy sensing initiator and a sensing responder in the proxy sensing procedure.

Optionally, for an implementation of step S301 in this embodiment of this application, refer to an implementation of step S101 in Embodiment 1 (that is, the embodiment shown in FIG. 5). Details are not described herein again.

S302: The proxy sensing initiator (AP) sends first information to the sensing responder (STA 3), where the first information includes the first measurement setup parameters, a first measurement setup identifier, and fourth information; the first measurement setup identifier identifies the first measurement setup parameters; and the fourth information includes information for identifying the requesting STA, and/or information indicating that a measurement setup requested to establish by using the first information belongs to the proxy sensing procedure.

Optionally, after obtaining the first measurement setup parameters, the AP (proxy sensing initiator) may set a measurement setup identifier (denoted as the first measurement setup identifier) for the first measurement setup parameters, and the measurement setup identifier identifies the first measurement setup parameters. The first measurement setup identifier may be set independently, in other words, the first measurement setup identifier may be a measurement setup identifier used by the AP (proxy sensing initiator). Alternatively, the first measurement setup identifier may not be a measurement setup identifier used by the AP (proxy sensing initiator), in other words, the first measurement setup identifier may be any value. For a meaning of the measurement setup identifier used by the AP (proxy sensing initiator), refer to the foregoing descriptions, and details are not described herein again. The AP (proxy sensing initiator) may obtain the fourth information, where the fourth information may include the information for identifying the requesting STA, and/or the information indicating that the measurement setup requested to establish by using the first information belongs to the proxy sensing procedure. The information for identifying the requesting STA may include one or more of the following: identifiers of the requesting STA, a part or all of MAC addresses of the requesting STA, and a virtual number of the requesting STA. The identifiers of the requesting STA are a part or all of association identifiers (AIDs) of the requesting STA, or a part or all of unassociated station identifiers (UIDs) of the requesting STA. The virtual number of the requesting STA may be set by the AP (proxy sensing initiator). The information indicating that the measurement setup requested to establish by using the first information belongs to the proxy sensing procedure may be 1 bit. When the bit is set to 1, it indicates that the measurement setup requested to establish by using the first information belongs to the proxy sensing procedure; or when the bit is set to 0, it indicates that the measurement setup requested to establish by using the first information does not belong to the proxy sensing procedure or indicates reserved (reserved). Certainly, when the bit is set to 0, it indicates that the measurement setup requested to establish by using the first information belongs to the proxy sensing procedure; or when the bit is set to 1, it indicates that the measurement setup requested to establish by using the first information does not belong to the proxy sensing procedure or indicates reserved (reserved). This is not limited in this embodiment of this application.

Optionally, after setting the first measurement setup identifier for the first measurement setup parameters and obtaining the fourth information, the AP (proxy sensing initiator) may send one piece of information (denoted as the first information) including the first measurement setup parameters, the first measurement setup identifier, and the fourth information to the sensing responder (for example, the STA 3 in FIG. 3). After receiving the first information, the sensing responder (for example, the STA 3) may establish an association relationship between the first measurement setup parameters, the first measurement setup identifier, and the fourth information, so that the first measurement setup parameters can be uniquely indexed by using the first measurement setup identifier and the fourth information in a subsequent sensing measurement procedure.

In other words, when the AP serving as a proxy sends the measurement setup identifier in the proxy sensing procedure to the sensing responder, information 1 (that is, the fourth information) may be carried. The information 1 may be: the requesting STA (STA 1) related information (for example, an AID, a UID, and a MAC address of the STA 1, and the virtual number (the virtual number corresponds to the requesting STA)), and/or the proxy sensing related information (for example, it indicates that the measurement setup belongs to the measurement setup in the proxy sensing procedure). Because the requesting STA related information and the proxy sensing related information are used for distinguishing, the sensing responder may distinguish, based on the information, measurement setup parameters corresponding to the measurement setup ID. Therefore, the measurement setup ID may be set independently in the proxy sensing procedure. For example, the requesting STA related information is carried. In this case, the sensing responder may distinguish, by using <STA 1 MAC Address, Measurement setup ID> or <AP MAC Address, STA 1 MAC Address, Measurement setup ID>, different measurement setup parameters identified by a same measurement setup ID. In other words, one element or a combination of a plurality of elements in <AP MAC Address, STA 1 MAC Address, measurement setup ID, proxy sensing related information> may be used as a basis for identifying a measurement setup.

Optionally, if the requesting STA sets a second measurement setup identifier for the first measurement setup parameters and notifies the AP (proxy sensing initiator), a mapping relationship may not exist in the AP (proxy sensing initiator). In other words, the AP directly uses the second measurement setup identifier when setting a measurement setup identifier for the first measurement setup parameters.

Optionally, after step S303, the measurement setup method in the proxy sensing procedure may further include: The proxy sensing initiator (AP) sends third information to the sensing responder (for example, the STA 3 in FIG. 3), where the third information includes the first measurement setup identifier and the fourth information. In other words, a manner in which the AP (proxy sensing initiator) sends the measurement setup ID carrying the fourth information in the proxy sensing procedure is applicable to a measurement setup procedure, and is also applicable to sensing procedures such as measurement instance and measurement setup termination. Optionally, in addition to carrying the first measurement setup identifier and the fourth information, the third information may further carry a part of parameters in the first measurement setup parameters, for example, a bandwidth.

Optionally, the fourth information may be a newly added field in a frame, in other words, the fourth information may have a corresponding field in the frame, for example, a MAC address field of the requesting STA or a proxy sensing related information field. If the frame carrying the fourth information is a frame sent in a broadcast form, for example, a null data packet announcement (null data packet announcement, NDPA) frame or a trigger frame (trigger frame, TF), the fourth information may be located in a common-level field of the frame, for example, a common information field (common info field). Certainly, the fourth information may alternatively be located in a user-level field, for example, a user information field (User Info field) or a station user information field (STA Info field). Alternatively, the fourth information may be carried in one or more special user information fields. In an example, the special user information field may be identified by using a special AID.

In this embodiment of this application, when sending the measurement setup ID in the proxy sensing procedure, the proxy sensing initiator (AP) carries the information for identifying the requesting STA and/or the information indicating that the established measurement setup belongs to the proxy sensing procedure, to assist the sensing responder (STA 3) in distinguishing different measurement setups. This embodiment of this application resolves, from another perspective, a problem of setting a measurement setup identifier in a proxy sensing scenario, thereby avoiding confusion.

The foregoing content describes in detail the methods provided in this application. To facilitate implementation of the foregoing solutions in embodiments of this application, embodiments of this application further provide corresponding apparatuses or devices.

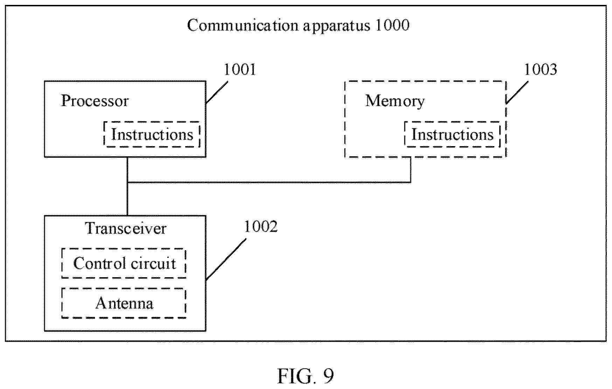

In embodiments of this application, the proxy sensing initiator (AP) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. The following describes in detail communication apparatuses in embodiments of this application with reference to FIG. 8 and FIG. 9. The communication apparatus is a proxy sensing initiator (AP). Further, the communication apparatus may be an apparatus in the proxy sensing initiator (AP).

When an integrated unit is used, refer to FIG. 8. FIG. 8 is a schematic diagram of a structure of a communication apparatus according to an embodiment of this application. The communication apparatus may be a proxy sensing initiator (AP) or a chip in the proxy sensing initiator (AP), for example, a Wi-Fi chip. As shown in FIG. 8, the communication apparatus includes an obtaining module 11 and a transceiver module 12.

In a design, the obtaining module 11 is configured to obtain first measurement setup parameters, where the first measurement setup parameters include parameters used by the proxy sensing initiator and a sensing responder in a proxy sensing procedure. The transceiver module 12 is configured to send first information to the sensing responder, where the first information includes the first measurement setup parameters and a first measurement setup identifier, the first measurement setup identifier identifies the first measurement setup parameters, and the first measurement setup identifier is different from measurement setup identifiers used by the proxy sensing initiator.

Optionally, the obtaining module 11 includes a receiving unit 111 and a determining unit 112. The receiving unit 111 is configured to receive second information sent by a requesting station STA, where the second information includes second measurement setup parameters, and the second measurement setup parameters include all or a part of the parameters used by the proxy sensing initiator and the sensing responder in the proxy sensing procedure. The determining unit 112 is configured to determine the first measurement setup parameters based on the second measurement setup parameters.

Optionally, the receiving unit 111 in the obtaining module 11 is configured to receive second information sent by a requesting STA, where the second information includes the first measurement setup parameters.

Optionally, the second information further includes a second measurement setup identifier, and the second measurement setup identifier corresponds to the first measurement setup identifier.

Optionally, when the second measurement setup identifier is not the measurement setup identifier used by the proxy sensing initiator, the first measurement setup identifier is the same as the second measurement setup identifier.

Optionally, the measurement setup identifiers used by the proxy sensing initiator include a measurement setup identifier used by the proxy sensing transmitter in a sensing procedure, and a measurement setup identifier used by the proxy sensing transmitter in the proxy sensing procedure.

Optionally, the transceiver module 12 is further configured to: send third information to the sensing responder, where the third information includes the first measurement setup identifier.

The obtaining module 11 may also be referred to as a processing module.

It should be understood that the communication apparatus in this design may correspondingly perform Embodiment 1, and the foregoing operations or functions of the units in the communication apparatus are used to implement corresponding operations of the proxy sensing initiator (AP) in Embodiment 1, respectively. For brevity, details are not described herein again.

In a design, the obtaining module 11 is configured to obtain first measurement setup parameters, where the first measurement setup parameters include parameters used by the proxy sensing initiator and a sensing responder in a proxy sensing procedure. The transceiver module 12 is configured to send first information to the sensing responder, where the first information includes the first measurement setup parameters and a first measurement setup identifier, and the first measurement setup identifier identifies the first measurement setup parameters. If a third measurement setup identifier that identifies measurement setup parameters same as the first measurement setup parameters exists in a first identifier set, the first measurement setup identifier is the third measurement setup identifier, or the first measurement setup identifier does not belong to the first identifier set; or if any measurement setup identifier that identifies measurement setup parameters same as the first measurement setup parameters does not exist in a first identifier set, the first measurement setup identifier does not belong to the first identifier set. The first identifier set includes measurement setup identifiers used by the proxy sensing initiator.

Optionally, the obtaining module 11 includes a receiving unit 111 and a determining unit 112. The receiving unit 111 is configured to receive second information sent by a requesting station STA, where the second information includes second measurement setup parameters, and the second measurement setup parameters include all or a part of the parameters used by the proxy sensing initiator and the sensing responder in the proxy sensing procedure. The determining unit 112 is configured to determine the first measurement setup parameters based on the second measurement setup parameters.

Optionally, the receiving unit 111 in the obtaining module 11 is configured to receive second information sent by a requesting STA, where the second information includes the first measurement setup parameters.

Optionally, the second information further includes a second measurement setup identifier, and the second measurement setup identifier corresponds to the first measurement setup identifier.

Optionally, the measurement setup identifiers used by the proxy sensing initiator include a measurement setup identifier used by the proxy sensing transmitter in a sensing procedure, and a measurement setup identifier used by the proxy sensing transmitter in the proxy sensing procedure.

Optionally, the transceiver module 12 is further configured to: send third information to the sensing responder, where the third information includes the first measurement setup identifier.

The obtaining module 11 may also be referred to as a processing module.

It should be understood that the communication apparatus in this design may correspondingly perform Embodiment 2, and the foregoing operations or functions of the units in the communication apparatus are used to implement corresponding operations of the proxy sensing initiator (AP) in Embodiment 2, respectively. For brevity, details are not described herein again.

In a design, the obtaining module 11 is configured to obtain first measurement setup parameters, where the first measurement setup parameters include parameters used by the proxy sensing initiator and a sensing responder in a proxy sensing procedure. The transceiver module 12 is configured to send first information to the sensing responder, where the first information includes the first measurement setup parameters, a first measurement setup identifier, and fourth information; the first measurement setup identifier identifies the first measurement setup parameters; and the fourth information includes information for identifying a requesting STA, and/or information indicating that a measurement setup requested to establish by using the first information belongs to the proxy sensing procedure.

Optionally, the information for identifying the requesting STA includes one or more of the following: identifiers of the requesting STA, a part or all of medium access control MAC addresses of the requesting STA, and a virtual number of the requesting STA. The identifiers of the requesting STA are a part or all of association identifiers of the requesting STA, or a part or all of unassociated station identifiers of the requesting STA.

Optionally, the obtaining module 11 includes a receiving unit 111 and a determining unit 112. The receiving unit 111 is configured to receive second information sent by the requesting station STA, where the second information includes second measurement setup parameters, and the second measurement setup parameters include all or a part of the parameters used by the proxy sensing initiator and the sensing responder in the proxy sensing procedure. The determining unit 112 is configured to determine the first measurement setup parameters based on the second measurement setup parameters.

Optionally, the receiving unit 111 in the obtaining module 11 is configured to receive second information sent by the requesting STA, where the second information includes the first measurement setup parameters.

Optionally, the second information further includes a second measurement setup identifier.

Optionally, the transceiver module 12 is further configured to: send third information to the sensing responder, where the third information includes the first measurement setup identifier and the fourth information.

The obtaining module 11 may also be referred to as a processing module.

It should be understood that the communication apparatus in this design may correspondingly perform Embodiment 3, and the foregoing operations or functions of the units in the communication apparatus are used to implement corresponding operations of the proxy sensing initiator (AP) in Embodiment 3, respectively. For brevity, details are not described herein again.

The foregoing describes the proxy sensing initiator (AP) in embodiments of this application, and the following describes a possible product form of the proxy sensing initiator (AP). It should be understood that any product in any form that has a function of the proxy sensing initiator (AP) in FIG. 8 falls within the protection scope of embodiments of this application. It should be further understood that the following description is merely an example, and is not limited to a product form of the proxy sensing initiator (AP) in embodiments of this application.

In a possible product form, the proxy sensing initiator (AP) described in embodiments of this application may be implemented by a general bus architecture.

For ease of description, refer to FIG. 9. FIG. 9 is a schematic diagram of a structure of a communication apparatus 1000 according to an embodiment of this application. The communication apparatus 1000 may be a proxy sensing initiator (AP) or a chip in the proxy sensing initiator (AP). FIG. 9 shows only main components of the communication apparatus 1000. In addition to a processor 1001 and a transceiver 1002, the communication apparatus may further include a memory 1003 and an input/output apparatus (which is not shown in the figure).

The processor 1001 is mainly configured to process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to perform conversion between a baseband signal and a radio frequency signal and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal in the form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

In a design, the communication apparatus 1000 may be configured to perform a function of the proxy sensing initiator (AP) in Embodiment 1. The processor 1001 may be configured to perform step S101 in FIG. 5, and/or another procedure of the technology described in this specification. The transceiver 1002 may be configured to perform step S102 in FIG. 5, and/or another procedure of the technology described in this specification.

In another design, the communication apparatus 1000 may be configured to perform a function of the proxy sensing initiator (AP) in Embodiment 2. The processor 1001 may be configured to perform step S201 in FIG. 6, and/or another procedure of the technology described in this specification. The transceiver 1002 may be configured to perform step S202 in FIG. 6, and/or another procedure of the technology described in this specification.

In still another design, the communication apparatus 1000 may be configured to perform a function of the proxy sensing initiator (AP) in Embodiment 3. The processor 1001 may be configured to perform step S301 in FIG. 7, and/or another procedure of the technology described in this specification. The transceiver 1002 may be configured to perform step S302 in FIG. 7, and/or another procedure of the technology described in this specification.

In any one of the foregoing designs, the processor 1001 may include a transceiver configured to implement sending and receiving functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be computer programs. When the computer programs are run on the processor 1001, the communication apparatus 1000 can perform the method described in any one of the foregoing embodiments. The computer programs may be fixed in the processor 1001. In this case, the processor 1001 may be implemented by hardware.

In an implementation, the communication apparatus 1000 may include a circuit, and the circuit may implement a sending/receiving/communication function in the foregoing embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (N-channel Metal-oxide-semiconductor, NMOS), a positive-channel metal-oxide-semiconductor (positive-channel metal-oxide-semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and the structure of the communication apparatus may not be limited in FIG. 9. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

In a possible product form, the proxy sensing initiator (AP) described in embodiments of this application may be implemented by a general-purpose processor.

The general-purpose processor implementing the proxy sensing initiator (AP) includes a processing circuit and an input/output interface that is internally connected to and communicates with the processing circuit.

In a design, the general-purpose processor may be configured to perform a function of the proxy sensing initiator (AP) in Embodiment 1. Specifically, the processing circuit may be configured to perform step S101 in FIG. 5, and/or another procedure of the technology described in this specification. The input/output interface may be configured to perform step S102 in FIG. 5, and/or another procedure of the technology described in this specification.

In another design, the general-purpose processor may be configured to perform a function of the proxy sensing initiator (AP) in Embodiment 2. Specifically, the processing circuit may be configured to perform step S201 in FIG. 6, and/or another procedure of the technology described in this specification. The input/output interface may be configured to perform step S202 in FIG. 6, and/or another procedure of the technology described in this specification.

In still another design, the general-purpose processor may be configured to perform a function of the proxy sensing initiator (AP) in Embodiment 3. Specifically, the processing circuit may be configured to perform step S301 in FIG. 7, and/or another procedure of the technology described in this specification. The input/output interface may be configured to perform step S302 in FIG. 7, and/or another procedure of the technology described in this specification.

It should be understood that the communication apparatuses in the foregoing various product forms have any function of the proxy sensing initiator (AP) in the method embodiments. Details are not described herein again.

An embodiment of this application further provides a computer-readable storage medium. The computer-readable storage medium stores computer program code. When the foregoing processor executes the computer program code, the electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The communication apparatus may exist in a product form of a chip. A structure of the communication apparatus includes a processor and an interface circuit. The processor is configured to communicate with another apparatus through the interface circuit, so that the communication apparatus performs the method in any one of the foregoing embodiments.

An embodiment of this application further provides a wireless communication system, including a requesting STA, a proxy sensing initiator, and a sensing responder. The proxy sensing initiator may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a special-purpose computer.

In the foregoing specific implementations, the objectives, technical solutions, and advantageous effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A measurement setup identifier determining method, comprising:
obtaining, by a proxy sensing initiator, first measurement setup parameters, wherein the first measurement setup parameters comprise parameters used by the proxy sensing initiator and a sensing responder in a proxy sensing procedure; and
sending, by the proxy sensing initiator, first information to the sensing responder, wherein the first information comprises the first measurement setup parameters and a first measurement setup identifier, the first measurement setup identifier identifies the first measurement setup parameters, and the first measurement setup identifier is different from measurement setup identifiers used by the proxy sensing initiator.

2. The method according to claim 1, wherein the obtaining, by a proxy sensing initiator, first measurement setup parameters comprises:
receiving, by the proxy sensing initiator, second information sent by a requesting station STA, wherein the second information comprises second measurement setup parameters, and the second measurement setup parameters comprise all or a part of the parameters used by the proxy sensing initiator and the sensing responder in the proxy sensing procedure; and
determining, by the proxy sensing initiator, the first measurement setup parameters based on the second measurement setup parameters.

3. The method according to claim 1, wherein the obtaining, by a proxy sensing initiator, first measurement setup parameters comprises:
receiving, by the proxy sensing initiator, second information sent by a requesting STA, wherein the second information comprises the first measurement setup parameters.

4. The method according to claim 2 or 3, wherein the second information further comprises a second measurement setup identifier, and the second measurement setup identifier corresponds to the first measurement setup identifier.

5. The method according to claim 4, wherein the second measurement setup identifier is not the measurement setup identifier used by the proxy sensing initiator, and the first measurement setup identifier is the same as the second measurement setup identifier.

6. The method according to any one of claims 1 to 5, wherein after the obtaining, by a proxy sensing initiator, first measurement setup parameters, the method further comprises:
sending, by the proxy sensing initiator, the first measurement setup identifier to the requesting STA.

7. The method according to any one of claims 1 to 6, wherein the measurement setup identifiers used by the proxy sensing initiator comprise a measurement setup identifier used by the proxy sensing transmitter in a sensing procedure, and a measurement setup identifier used by the proxy sensing transmitter in the proxy sensing procedure.

8. The method according to any one of claims 1 to 7, wherein after the sending, by the proxy sensing initiator, first information to the sensing responder, the method further comprises:
sending, by the proxy sensing initiator, third information to the sensing responder, wherein the third information comprises the first measurement setup identifier.

9. The method according to any one of claims 1 to 8, wherein the first information further comprises one or more of the following:
information for identifying the requesting STA, or information indicating that a measurement setup requested to establish by using the first information belongs to the proxy sensing procedure.

10. The method according to claim 8, wherein the third information further comprises one or more of the following:
information for identifying the requesting STA, or information indicating that a measurement setup requested to establish by using the first information belongs to the proxy sensing procedure.

11. A measurement setup identifier determining method, comprising:
obtaining, by a proxy sensing initiator, first measurement setup parameters, wherein the first measurement setup parameters comprise parameters used by the proxy sensing initiator and a sensing responder in a proxy sensing procedure; and
sending, by the proxy sensing initiator, first information to the sensing responder, wherein the first information comprises the first measurement setup parameters and a first measurement setup identifier, and the first measurement setup identifier identifies the first measurement setup parameters, wherein
if a third measurement setup identifier that identifies measurement setup parameters same as the first measurement setup parameters exists in a first identifier set, the first measurement setup identifier is the third measurement setup identifier, or the first measurement setup identifier does not belong to the first identifier set; or if any measurement setup identifier that identifies measurement setup parameters same as the first measurement setup parameters does not exist in a first identifier set, the first measurement setup identifier does not belong to the first identifier set; and the first identifier set comprises measurement setup identifiers used by the proxy sensing initiator.

12. The method according to claim 11, wherein the obtaining, by a proxy sensing initiator, first measurement setup parameters comprises:
receiving, by the proxy sensing initiator, second information sent by a requesting station STA, wherein the second information comprises second measurement setup parameters, and the second measurement setup parameters comprise all or a part of the parameters used by the proxy sensing initiator and the sensing responder in the proxy sensing procedure; and
determining, by the proxy sensing initiator, the first measurement setup parameters based on the second measurement setup parameters.

13. The method according to claim 11, wherein the obtaining, by a proxy sensing initiator, first measurement setup parameters comprises:
receiving, by the proxy sensing initiator, second information sent by a requesting STA, wherein the second information comprises the first measurement setup parameters.

14. The method according to claim 12 or 13, wherein the second information further comprises a second measurement setup identifier, and the second measurement setup identifier corresponds to the first measurement setup identifier.

15. The method according to any one of claims 11 to 14, wherein after the obtaining, by a proxy sensing initiator, first measurement setup parameters, the method further comprises:
sending, by the proxy sensing initiator, the first measurement setup identifier to the requesting STA.

16. The method according to any one of claims 11 to 15, wherein the measurement setup identifiers used by the proxy sensing initiator comprise a measurement setup identifier used by the proxy sensing transmitter in a sensing procedure, and a measurement setup identifier used by the proxy sensing transmitter in the proxy sensing procedure.

17. The method according to any one of claims 11 to 16, wherein after the sending, by the proxy sensing initiator, first information to the sensing responder, the method further comprises:
sending, by the proxy sensing initiator, third information to the sensing responder, wherein the third information comprises the first measurement setup identifier.

18. The method according to any one of claims 11 to 17, wherein the first information further comprises one or more of the following:
information for identifying the requesting STA, or information indicating that a measurement setup requested to establish by using the first information belongs to the proxy sensing procedure.

19. The method according to claim 17, wherein the third information further comprises one or more of the following:
information for identifying the requesting STA, or information indicating that a measurement setup requested to establish by using the first information belongs to the proxy sensing procedure.

20. A communication apparatus, comprising:
an obtaining module, configured to obtain first measurement setup parameters, wherein the first measurement setup parameters comprise parameters used by the proxy sensing initiator and a sensing responder in a proxy sensing procedure; and
a transceiver module, configured to send first information to the sensing responder, wherein the first information comprises the first measurement setup parameters and a first measurement setup identifier, the first measurement setup identifier identifies the first measurement setup parameters, and the first measurement setup identifier is different from measurement setup identifiers used by the proxy sensing initiator.

21. The communication apparatus according to claim 20, wherein the obtaining module comprises:
a receiving unit, configured to receive second information sent by a requesting station STA, wherein the second information comprises second measurement setup parameters, and the second measurement setup parameters comprise all or a part of the parameters used by the proxy sensing initiator and the sensing responder in the proxy sensing procedure; and
a determining unit, configured to determine the first measurement setup parameters based on the second measurement setup parameters.

22. The communication apparatus according to claim 20, wherein the obtaining module comprises:
a receiving unit, configured to receive second information sent by a requesting STA, wherein the second information comprises the first measurement setup parameters.

23. The communication apparatus according to claim 21 or 22, wherein the second information further comprises a second measurement setup identifier, and the second measurement setup identifier corresponds to the first measurement setup identifier.

24. The communication apparatus according to claim 23, wherein the second measurement setup identifier is not the measurement setup identifier used by the proxy sensing initiator, and the first measurement setup identifier is the same as the second measurement setup identifier.

25. The communication apparatus according to any one of claims 20 to 24, wherein the transceiver module is further configured to send the first measurement setup identifier to the requesting STA.

26. The communication apparatus according to any one of claims 20 to 25, wherein the measurement setup identifiers used by the proxy sensing initiator comprise a measurement setup identifier used by the proxy sensing transmitter in a sensing procedure, and a measurement setup identifier used by the proxy sensing transmitter in the proxy sensing procedure.

27. The communication apparatus according to any one of claims 20 to 26, wherein the transceiver module is further configured to:
send third information to the sensing responder, wherein the third information comprises the first measurement setup identifier.

28. The communication apparatus according to any one of claims 20 to 27, wherein the first information further comprises one or more of the following:
information for identifying the requesting STA, or information indicating that a measurement setup requested to establish by using the first information belongs to the proxy sensing procedure.

29. The communication apparatus according to claim 27, wherein the third information further comprises one or more of the following:
information for identifying the requesting STA, or information indicating that a measurement setup requested to establish by using the first information belongs to the proxy sensing procedure.

30. A communication apparatus, comprising:
an obtaining module, configured to obtain first measurement setup parameters, wherein the first measurement setup parameters comprise parameters used by the proxy sensing initiator and a sensing responder in a proxy sensing procedure; and
a transceiver module, configured to send first information to the sensing responder, wherein the first information comprises the first measurement setup parameters and a first measurement setup identifier, and the first measurement setup identifier identifies the first measurement setup parameters, wherein
if a third measurement setup identifier that identifies measurement setup parameters same as the first measurement setup parameters exists in a first identifier set, the first measurement setup identifier is the third measurement setup identifier, or the first measurement setup identifier does not belong to the first identifier set; or if any measurement setup identifier that identifies measurement setup parameters same as the first measurement setup parameters does not exist in a first identifier set, the first measurement setup identifier does not belong to the first identifier set; and the first identifier set comprises measurement setup identifiers used by the proxy sensing initiator.

31. The communication apparatus according to claim 30, wherein the obtaining module comprises:
a receiving unit, configured to receive second information sent by a requesting station STA, wherein the second information comprises second measurement setup parameters, and the second measurement setup parameters comprise all or a part of the parameters used by the proxy sensing initiator and the sensing responder in the proxy sensing procedure; and
a determining unit, configured to determine the first measurement setup parameters based on the second measurement setup parameters.

32. The communication apparatus according to claim 30, wherein the obtaining module comprises:
a receiving unit, configured to receive second information sent by a requesting STA, wherein the second information comprises the first measurement setup parameters.

33. The communication apparatus according to claim 31 or 32, wherein the second information further comprises a second measurement setup identifier, and the second measurement setup identifier corresponds to the first measurement setup identifier.

34. The communication apparatus according to any one of claims 30 to 33, wherein the transceiver module is further configured to send the first measurement setup identifier to the requesting STA.

35. The communication apparatus according to any one of claims 30 to 34, wherein the measurement setup identifiers used by the proxy sensing initiator comprise a measurement setup identifier used by the proxy sensing transmitter in a sensing procedure, and a measurement setup identifier used by the proxy sensing transmitter in the proxy sensing procedure.

36. The communication apparatus according to any one of claims 30 to 35, wherein the transceiver module is further configured to:
send third information to the sensing responder, wherein the third information comprises the first measurement setup identifier.

37. The communication apparatus according to any one of claims 30 to 36, wherein the first information further comprises one or more of the following:
information for identifying the requesting STA, or information indicating that a measurement setup requested to establish by using the first information belongs to the proxy sensing procedure.

38. The communication apparatus according to claim 36, wherein the third information further comprises one or more of the following:
information for identifying the requesting STA, or information indicating that a measurement setup requested to establish by using the first information belongs to the proxy sensing procedure.

39. A communication apparatus, comprising a processor and a transceiver, wherein the transceiver is configured to send/receive information; and when the processor runs program instructions, the communication apparatus performs the method according to any one of claims 1 to 19.

40. A computer-readable storage medium, wherein the computer-readable storage medium stores program instructions; and when the program instructions are run on a computer, the computer is enabled to perform the method according to any one of claims 1 to 19.

41. A computer program product comprising program instructions, wherein when the program instructions are run on a computer, the computer is enabled to perform the method according to any one of claims 1 to 19.
